# EUROPEAN PATENT SPECIFICATION

(11) **EP 1 710 587 B1**
(45) Date of publication and mention of the grant of the patent: **03.08.2016**
(21) Application number: 06010992.3
(22) Date of filing: 19.08.2004
(51) Int. Cl.: G01N 35/10, G01N 35/04, B01L 3/00, G01N 35/00

(54) **Nucleic acid detection method**
Nukleinsäuredetekionsverfahren
Procédé de détection de l'acide nucléique

(30) Priority: 20.08.2003 JP 2003295940; 20.08.2003 JP 2003296114; 23.01.2004 JP 2004015572; 23.01.2004 JP 2004015932
(43) Date of publication of application: 11.10.2006
(62) Divisional of application: 04019717.0
(73) Proprietor: SYSMEX CORPORATION, Chuo-ku Kobe 651-0073 (JP)
(72) Inventor: Ueda, Makoto, Kobe-shi, Hyogo 651-0073 (JP); Inoue, Hisaaki, Himeji-shi Hyogo 570-0874 (JP); Sakurai, Kazuyuki, Kobe-shi, Hyogo 651-0073 (JP); Tanoshima, Eiji, Kobe-shi, Hyogo 651-0073 (JP); Wakamiya, Yuji, Kobe-shi, Hyogo 651-0073 (JP); Tobimatsu, Hiroaki, Kobe-shi, Hyogo 651-0073 (JP); Nagame, Yuichi, Kobe-shi, Hyogo 651-0073 (JP)
(74) Representative: Hoffmann Eitle

(56) References cited:
- EP-A1- 0 684 316
- EP-A1- 1 020 534
- EP-A2- 0 703 457
- EP-B- 1 032 839
- WO-A1-95/30139
- WO-A2-95/11083
- US-A- 5 503 721
- US-A1- 2003 102 323
- US-A1- 2003 152 492

## Description

### BACKGROUND OF THE INVENTION

### Field of the Invention

The present invention relates to a sample analyzer, a nucleic acid detector and a nucleic acid detection method.

### Description of the Background Art

A sample analyzer for analyzing samples is known in general as disclosed in European Patent No. 0628823, for example. This European Patent No. 0628823 discloses a sequential multichannel immunoassay system intermittently slidingly moving a reaction tray in a sample module for dispensing reagents into the reaction tray while transporting the reaction tray in a dispensation module for dispensing specimens into the reaction tray thereby treating and detecting the specimens.

In the aforementioned sequential multichannel immunoassay system according to European Patent No. 0628823 dispensing the reagents and the specimens into a relatively large reaction tray including 10 dispensation wells while slidingly moving and transporting the same, however, mechanisms for intermittently slidingly moving and transporting the relatively large reaction tray respectively are disadvantageously increased in size. Thus, an analyzer of this system is disadvantageously increased in size. Further, it is difficult to sufficiently increase the speed for slidingly moving and transporting the relatively large reaction tray including 10 dispensation wells, and hence it is disadvantageously difficult to perform sufficiently prompt analysis.

In a conventional sample analyzer for analyzing samples or a conventional nucleic acid detector detecting nucleic acids, further, a sample may scatter to disadvantageously contaminate the remaining samples or reagents in the process of analysis or detection.

Documents WO 95/30139 A1 and US 2003/152492 A1 disclose further examples of conventional nucleic acid detection methods.

### SUMMARY OF THE INVENTION

An object of the present invention is to provide a nucleic acid detection method capable of preventing a sample or a reagent from contamination.

In order to attain the aforementioned objects, the invention provides a nucleic acid detection method having the features of claim 1. Preferred embodiments are defined in the dependent claims.

A nucleic acid detection method according to the present invention comprises the steps of claim 1.

In the nucleic acid detection method the lid of the detection container is closed after completely dispensing the reagent and the sample into the detection container while the target nucleic acid is amplified and the presence thereof is detected in the detection container having the closed lid so that the lid of the detection container is closed in amplification and detection, whereby the amplified target nucleic acid can be prevented from contaminating another sample or another reagent. Further, the detection container integrally provided with the lid is so employed that the lid does not fall on another detection container, whereby no sample in the other detection container is contaminated due to a fall of the lid.

The aforementioned nucleic acid detection method carries out the steps of dispensing the reagent and the sample, closing the lid, amplifying the target nucleic acid and detecting the target acid while arranging the detection container on the same position. According to this structure, the structure of a nucleic acid detector can be simplified as compared with a case of dispensing the reagent and the sample, closing the lid, amplifying the target nucleic acid and detecting the target nucleic acid on different positions respectively, while a treatment time can be reduced due to no movement of the detection container.

In a preferred embodiment, the step of dispensing the reagent and the sample includes a step of dispensing the reagent and the sample into the detection container while opening the lid of the detection container. According to this structure, the reagent and the sample can be easily dispensed into the detection container with a dispensing part.

The aforementioned nucleic acid detection method preferably further comprises a step of discarding the detection container having the closed lid after carrying out the step of detecting the presence of the nucleic acid. According to this structure, the lid of the detection container is closed when the detection container is discarded, whereby the amplified target nucleic acid can be prevented from contaminating the user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a gene amplifier/detector (sample analyzer/nucleic acid analyzer)
   and peripheral equipment thereof;
Fig. 2 is a perspective view showing the overall structure of a measuring part of the gene amplifier/detector shown in Fig. 1;
Fig. 3 is a schematic plan view of the measuring part of the gene amplifier/detector shown in Fig. 2;
Fig. 4 schematically illustrates the structure of a syringe part in the measuring part of the gene amplifier/detector shown in Fig. 2;
Fig. 5 is a sectional view showing the structure of a pipette tip employed for the gene amplifier/detector shown in Fig. 2;
Fig. 6 is a perspective view showing a preserved state of a rack storing pipette tips employed for the gene amplifier/detector shown in Fig. 2;
Fig. 7 is an enlarged perspective view of a reaction detection part in the measuring part of the gene amplifier/detector shown in Fig. 2;
Fig. 8 is a perspective view showing a detection cell, employed for the measuring part of the gene amplifier/detector shown in Fig. 2, with an open lid;
Fig. 9 is a perspective view showing the detection cell, employed for the measuring part of the gene amplifier/detector shown in Fig. 2, with a closed lid as viewed along arrow A in Fig. 8;
Fig. 10 is a perspective view showing a cell member constituting the detection cell shown in Fig. 8;
Fig. 11 is a sectional view of the cell member constituting the detection cell shown in Fig. 10;
Fig. 12 is a perspective view showing a lid member constituting the detection cell shown in Fig. 8;
Fig. 13 is a front elevational view showing a lid closing mechanism part of the reaction detection part in the measuring part of the gene amplifier/detector shown in Fig. 2;
Fig. 14 is a partially fragmented side elevational view of the lid closing mechanism part shown in Fig. 13;
Fig. 15 is a plan view of the lid closing mechanism part shown in Fig. 13;
Figs. 16 to 18 are schematic diagrams for illustrating an operation of the lid closing mechanism part shown in Fig. 13;
Fig. 19 is a graph showing the relation between a time and turbidity measured by the gene amplifier/detector shown in Fig. 2;
Fig. 20 is a graph illustrating a calibration curve showing the relation between an amplification rise time and a target gene concentration employed in the gene amplifier/detector shown in Fig. 2;
Fig. 21 is a perspective view showing the overall structure of a measuring part of a gene amplifier/detector according to a second embodiment of the present invention;
Fig. 22 is a schematic plan view of the measuring part of the gene amplifier/detector shown in Fig. 21;
Fig. 23 is a plan view showing a sample container set part and a reagent container set part in the measuring part of the gene amplifier/detector shown in Fig. 22;
Fig. 24 is a right side elevational view of the sample container set part and the reagent container set part shown in Fig. 23;
Fig. 25 is a plan view showing a state of detaching a sample container set table and a reagent container set table from the state shown in Fig. 23;
Fig. 26 is a plan view of the sample container set table constituting the sample container set part shown in Fig. 23;
Fig. 27 is a front elevational view of the sample container set table shown in Fig. 26;
Fig. 28 is a right side elevational view of the sample container set table shown in Fig. 26;
Fig. 29 is a sectional view taken along the line 500-500 in Fig. 26;
Fig. 30 is a plan view of the reagent container set table constituting the reagent container set part shown in Fig. 23;
Fig. 31 is a front elevational view of the reagent container set table shown in Fig. 30;
Fig. 32 is a right side elevational view of the reagent container set table shown in Fig. 30;
Fig. 33 is a sectional view taken along the line 600-600 in Fig. 30;
Fig. 34 is a schematic diagram showing a state of fitting a bag set table in a storage part in the measuring part of the gene amplifier/detector shown in Fig. 22;
Fig. 35 is a perspective view showing a state of setting a tip disposal bag on a bag set table in the measuring part of the gene amplifier/detector shown in Fig. 22;
Fig. 36 is a plan view showing the storage part in the measuring part of the gene amplifier/detector shown in Fig. 22;
Fig. 37 is a left side elevational view of the storage part shown in Fig. 36;
Fig. 38 is a perspective view showing the bag set table in the measuring part of the gene amplifier/detector shown in Fig. 22;
Fig. 39 is a perspective view showing a state of rotating a bag holding member in the bag set table shown in Fig. 38;
Fig. 40 is a perspective view showing the tip disposal bag in the measuring part of the gene amplifier/detector shown in Fig. 22;
Fig. 41 is an enlarged perspective view of a droplet removing member in the measuring part of the gene amplifier/detector shown in Fig. 22;
Fig. 42 is an enlarged plan view showing a lid closing mechanism part of a reaction detection part in the measuring part of the gene amplifier/detector shown in Fig. 22;
Fig. 43 is a partially fragmented side elevational view showing the lid closing mechanism part of the reaction detection part in the measuring part of the gene amplifier/detector shown in Fig. 22;
Fig. 44 is a front elevational view showing the lid closing mechanism part of the reaction detection part in the measuring part of the gene amplifier/detector shown in Fig. 22;
Fig. 45 is a plan view showing the lid closing mechanism part of the reaction detection part in the measuring part of the gene amplifier/detector shown in Fig. 22;
Fig. 46 is a right side elevational view of the lid closing mechanism part shown in Fig. 45;
Fig. 47 is a schematic plan view for illustrating a droplet removing operation in the droplet removing member of the measuring part of the gene amplifier/detector shown in Fig. 22; and
Fig. 48 is a schematic plan view for illustrating a lid pressing operation of the lid closing mechanism part of the reaction detection part in the measuring part of the gene amplifier/detector shown in Fig. 22.

### DESCRIPTION OF THE PREFERRED EMBODIMENTS

Embodiments of the present invention are now described with reference to the drawings.

### (First Embodiment)

A gene amplifier/detector 100 according to a first embodiment of the present invention is described as an exemplary sample analyzer (nucleic acid detector) according to the present invention. The gene amplifier/detector 100 according to the first embodiment, supporting cancer metastasis diagnosis of tissues resected in cancer operations, is employed for amplifying cancer derivation nucleic acid (mRNA) present in the resected tissues by LAMP (loop-mediated isothermal amplification by Eiken Chemical Co., Ltd.) and detecting the same by measuring turbidity of solutions resulting from the amplification. U.S. Patent No. 6410278 discloses the LAMP in detail.

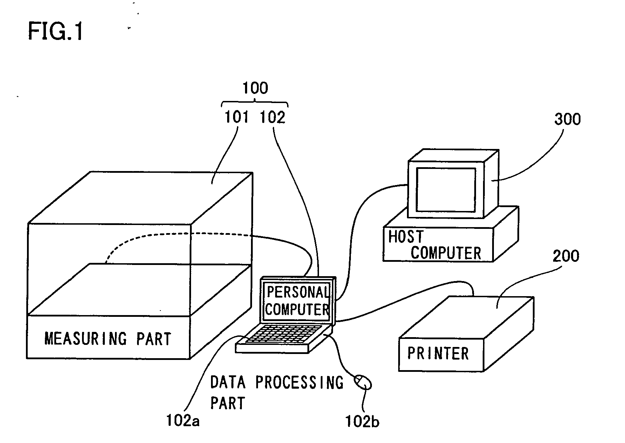

The overall structure of the gene amplifier/detector 100 (sample analyzer/nucleic acid detector) according to the first embodiment and peripheral equipment thereof is now described with reference to Fig. 1. As shown in Fig. 1, the gene amplifier/detector 100 according to the first embodiment is constituted of a measuring part 101 and a data processing part 102 connected with the measuring part 101 through a communication line. The data processing part 102 consists of a personal computer including a keyboard 102a and a mouse 102b. A printer 200 and a host computer 300 forming the peripheral equipment are connected to the data processing part 102 through communication lines. The printer 200 is provided for printing graphic data and text data. The data processing part 102 outputs measured data to the host computer 300.

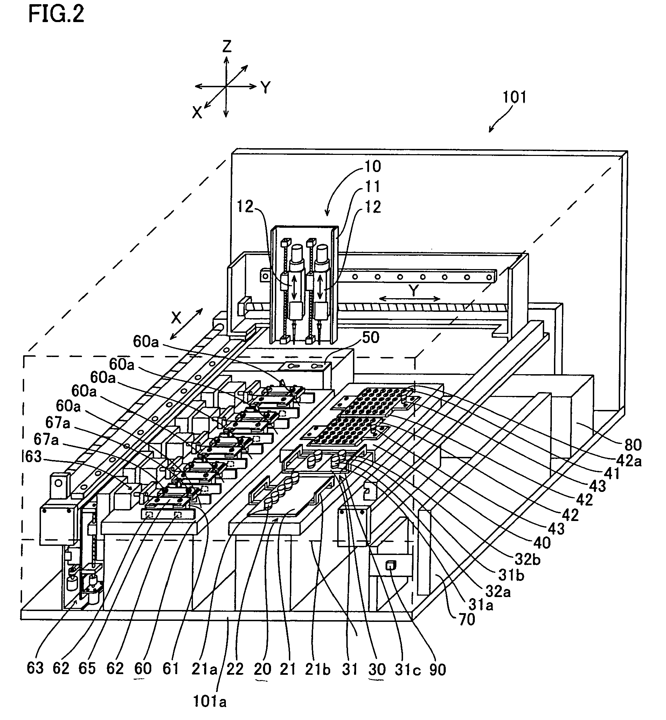

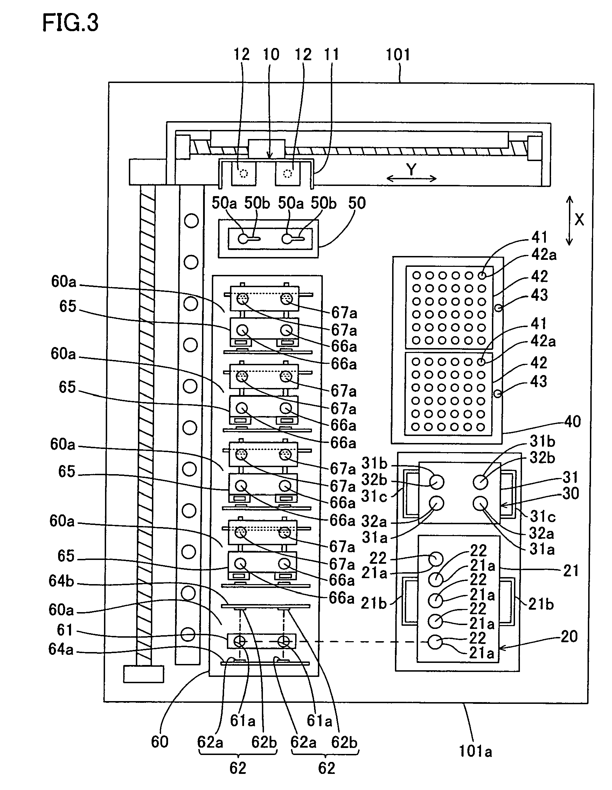

As shown in Figs. 2 and 3, the measuring part 101 includes a dispensing mechanism part 10, a sample container set part 20, a reagent container set part 30, a tip set part 40, a tip disposal part 50 and a reaction detection part 60 consisting of five reaction detection blocks 60a, which are set on a base 101a (see Fig. 2). Further, a control part 70 controlling the gene amplifier/detector 100 with a microcomputer while also controlling input/output from/to an external device and a power supply part 80 supplying power to the overall amplifier/detector 100 including the control part 70 are built in the measuring part 101, as shown in Fig. 2. An emergency stop switch 90 is set on a prescribed portion of the front face of the measuring part 101.

According to the first embodiment, the sample container set part 20, the reagent container set part 30 and the tip set part 40 are arranged along an X-axis direction. The sample container set part 20 is arranged on a portion closer to the front face of the gene amplifier/detector 100, while the reagent container set part 30 is arranged on a portion farther from the front face of the gene amplifier/detector 100. The five reaction detection blocks 60a and the tip disposal part 50 are arranged on positions, separated from the sample container set part 20, the reagent container set part 30 and the tip set part 40 at prescribed intervals in a Y-axis direction, along the X-axis direction. In other words, the five reaction detection blocks 60a and the tip disposal part 50 are arranged oppositely to the sample container set part 20, the reagent container set part 30 and the tip set part 40 along the Y-axis direction. That is, the sample container set part 20, the reagent container set part 30, the tip set part 40, the tip disposal part 50 and the five reaction detection blocks 60a are quadratically (rectangularly) arranged according to the first embodiment.

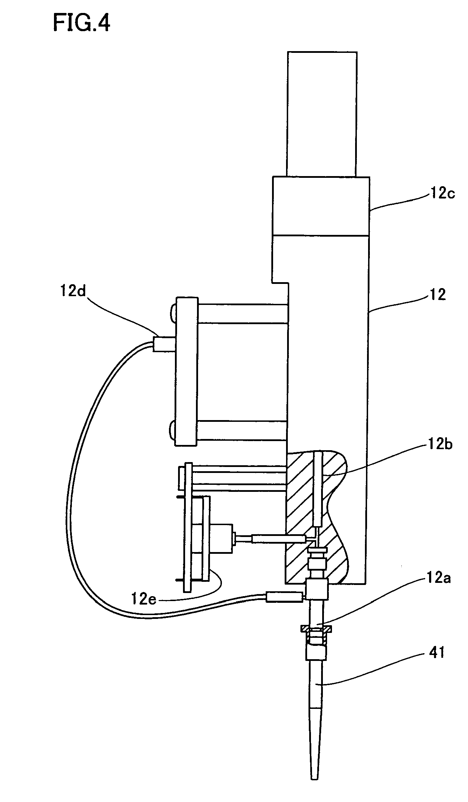

The dispensing mechanism part 10 includes an arm part 11 movable in the X- and Y-axis directions (planar directions) and double (two) syringe parts 12 individually movable in a Z-axis direction (vertical direction) with respect to the arm part 11 respectively. As shown in Fig. 4, each syringe part 12 includes a nozzle part 12a mounted on its forward end with a pipette tip 41 described later, a pump part 12b for suction and discharge, a motor 12c serving as a driving source for the pump part 12b, a level sensor 12d and a pressure sensor 12e. The pump part 12b converts rotation of the motor 12c to piston motion, thereby obtaining sucking and discharging functions. The level sensor 12d, formed by a capacitance type sensor, senses the forward end of the pipette tip 41 consisting of conductive resin touching a level. The pressure sensor 12e senses pressure in suction and discharge with the pump part 12b. The level sensor 12d and the pressure sensor 12e sense whether or not the pump part 12b reliably performs suction and discharge.

As shown in Figs. 2 and 3, a sample container set table 21 having five sample container set holes 21a and grip parts 21b is detachably fitted in a recess portion (not shown) of the sample container set part 20. The five sample container set holes 21a of the sample container set table 21 are provided in a line at prescribed intervals along the X-axis direction. Sample containers 22 storing solubilized extracts (samples) prepared by treating (homogenizing, filtrating and diluting) resected tissues are previously set in the five sample container set holes 21a of the sample container set table 21. Further, a container storing a calibrator containing a target gene of a prescribed concentration forming the standard for creating a calibration curve described later, a container storing a negative control for confirming that a gene not to be amplified is not normally amplified and the like are also arranged in the sample container set holes 21a.

A reagent container set table 31 having two primer reagent container set holes 31a, two enzyme reagent container set holes 31b and grip parts 31c is detachably fitted in a recess portion (not shown) of the reagent container set part 30. The two primer reagent container set holes 31a and the two enzyme reagent container set holes 31b of the reagent container set table 31 are provided along the Y-axis direction at prescribed intervals respectively. Two primer reagent containers 32a storing two types of primer reagents and two enzyme reagent containers 32b storing enzyme reagents corresponding to the two types of primer reagents are set in the primer reagent container set holes 31a and the enzyme reagent container set holes 31b of the reagent container set table 31 respectively. According to the first embodiment, the primer reagent container 32a and the enzyme reagent container 32b arranged in the front left primer reagent container set hole 31a and the front left enzyme reagent container set hole 31b store a primer reagent of cytokeratin 19 (CK 19) and an enzyme reagent of CK 19 respectively. On the other hand, the primer reagent container 32a and the enzyme reagent container 32b arranged in the front right primer reagent container set hole 31a and the front right enzyme reagent container set hole 31b store a primer reagent of β-actin and an enzyme reagent of β-actin respectively.

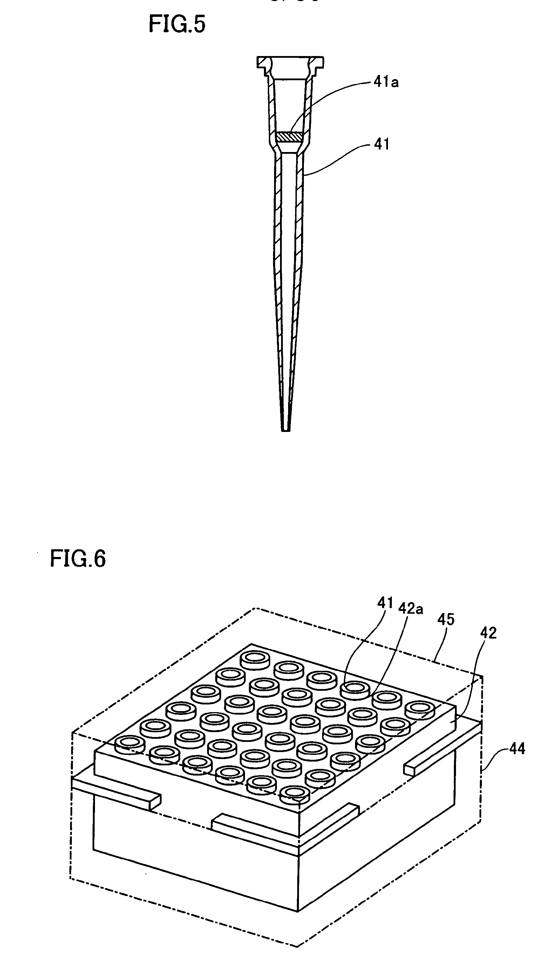

Two racks 42 each having storage holes 42a capable of storing 36 pipette tips 41 are detachably fitted in two recess portions (not shown) of the tip set part 40 respectively. The tip set part 40 is provided with two detacher buttons 43, which are pushed for rendering the racks 42 detachable. As shown in Fig. 5, each pipette tip 41, consisting of a conductive resin material containing carbon, is mounted therein with a filter 41a having a function of preventing a liquid from falsely flowing into each syringe part 12. The pipette tips 41 are subjected to electron beam irradiation in a packed state before shipment, so that decomposed enzyme of human saliva or the like adherable in the process of manufacturing the pipette tips 41 exerts no bad influence on amplification of genes. Each rack 42 storing the pipette tips 41 is preserved with a lower cover 44 and an upper cover 45 attached thereto as shown in Fig. 6, before the same is set on the tip set part 40.

As shown in Fig. 3, the tip disposal part 50 is provided with two tip disposal holes 50a for disposing used pipette tips 41. Further, groove parts 50b having a smaller width than the tip disposal holes 50a are provided continuously to the tip disposal holes 50a.

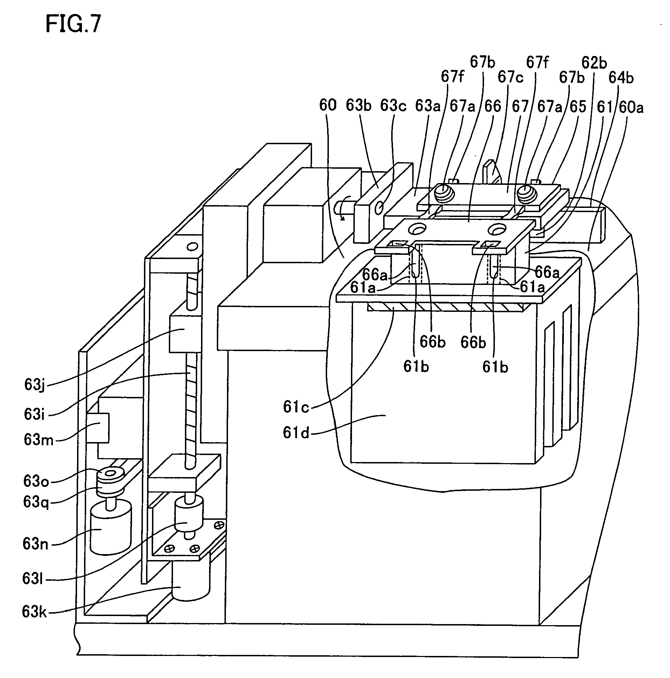

As shown in Fig. 2, each reaction detection block 60a of the reaction detection part 60 is constituted of a reaction part 61, two turbidity detection parts 62 and a lid closing mechanism part 63. As shown in Fig. 3, each reaction part 61 is provided with two detection cell set holes 61a for setting detection cells 65. According to the first embodiment, the detection cell set holes 61a closest to the front face of the gene amplifier/detector 100 are arranged on the same Y-axis line as the sample container set hole 21a closest to the front face of the gene amplifier/detector 100. In other words, the detection cell set holes 61a closest to the front face of the gene amplifier/detector 100 and the sample container set hole 21a closest to the front face of the gene amplifier/detector 100 are arranged on a line substantially parallel to a straight line close to the front face of the base 101a. As shown in Fig. 7, each reaction part 61 is provided with light application grooves 61b for exposing the detection cell set holes 61a. Each reaction part 61 is further provided with a Peltier module 61c and a radiation heat sink 61d for controlling the temperature of a liquid in each detection cell 65 to about 20°C to about 65°C.

As shown in Fig. 3, each turbidity detection part 62 is constituted of an LED light source part 62a consisting of a blue LED, mounted on a substrate 64a arranged on a first side surface of each reaction part 61, having a wavelength of 465 nm and a photodiode part 62b mounted on another substrate 64b arranged on a second side surface of each reaction part 61. In other words, the two turbidity detection parts 62 consisting of single LED light source parts 62a and single photodiode parts 62b are arranged on each reaction detection block 60a. Therefore, 10 turbidity detection parts 62 consisting of 10 LED light source parts 62a and 10 photodiode parts 62b are arranged on the five reaction detection blocks 60a in total. Each LED light source part 62a and the photodiode part 62b corresponding thereto are so arranged that the LED light source part 62a applies light of about 1 mm in diameter to a lower portion of each detection cell 65 and the photodiode part 62b can receive this light. The LED light source part 62a and the photodiode part 62b corresponding thereto have functions of detecting presence/absence of each detection cell 65 and detecting (monitoring) turbidity of the liquid stored in the detection cell 65 in real time.

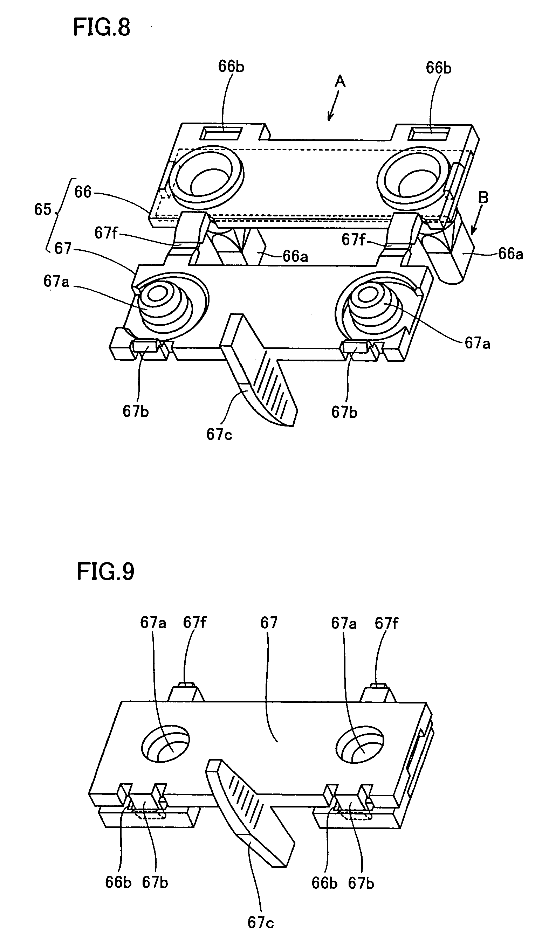

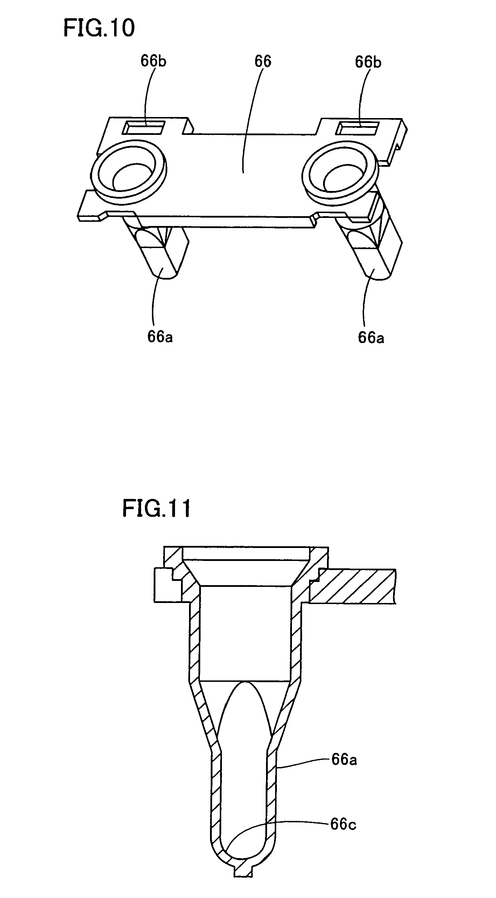

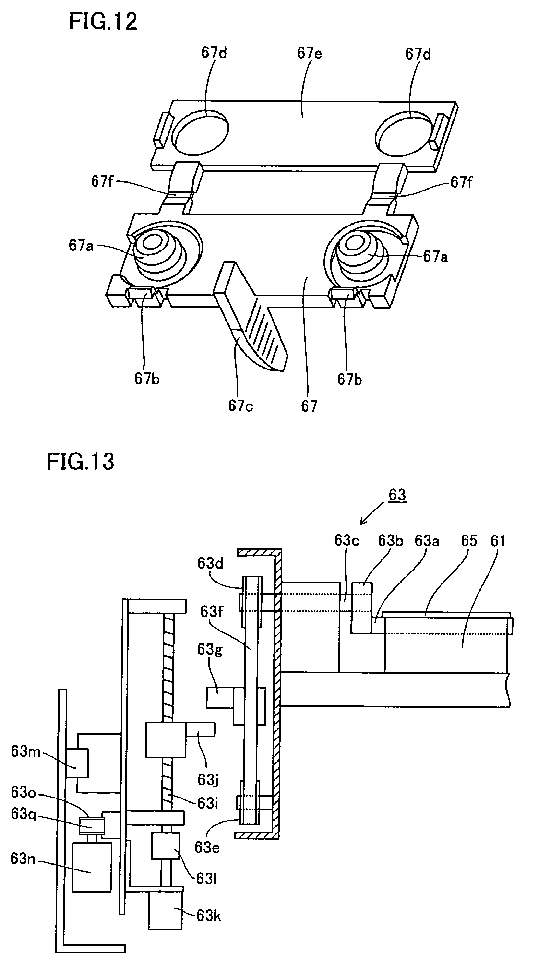

As shown in Figs. 8 to 12, each detection cell 65 is formed by integrally combining a cell member 66 of light-transmittable heat-resistant transparent resin (crystalline olefinic thermoplastic resin such as polymethyl pentene (TPX), for example) and a lid member 67 of heat-resistant resin (high-density polyethylene, for example). The detection cells 65 are subjected to electron beam irradiation in a packed state before shipment, so that decomposed enzyme of human saliva or the like adherable in the process of manufacturing the detection cells 65 exerts no bad influence on amplification of genes. As shown in Fig. 10, the cell member 66 constituting each detection cell 65 is integrally formed with two cell parts 66a and two hook engaging holes 66b. As shown in Fig. 11, an inner wall bottom portion 66c of each cell part 66a of each cell member 66 is so rounded that a level height detectable by each turbidity detection part 62 can be obtained regardless of the liquid quantity. As shown in Fig. 12, the lid member 67 constituting each detection cell 65 is integrally formed with two lid parts 67a, two hook parts 67b, a grip part 67c, a cell member mounting part 67e having two cell member mounting holes 67d, and two coupling parts 67f. Each detection cell 65 is integrally assembled by inserting the two cell parts 66a of the cell member 66 into the two cell member mounting holes 67d of the lid member 67. When the lid parts 67a open in the state shown in Fig. 8 are closed as shown in Fig. 9, the two hook parts 67b of the lid member 67 engage with the corresponding hook engaging holes 66b of the cell member 66 respectively. Thus, the lid parts 67a are kept closed.

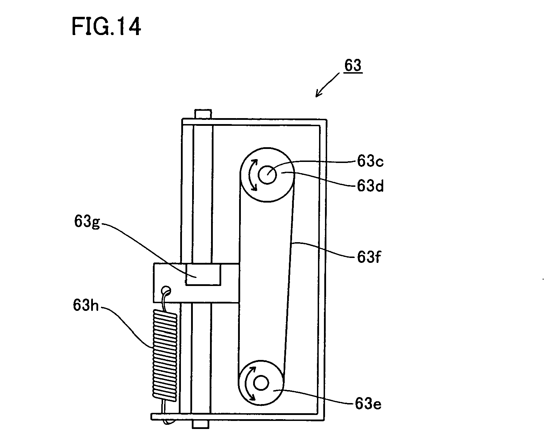

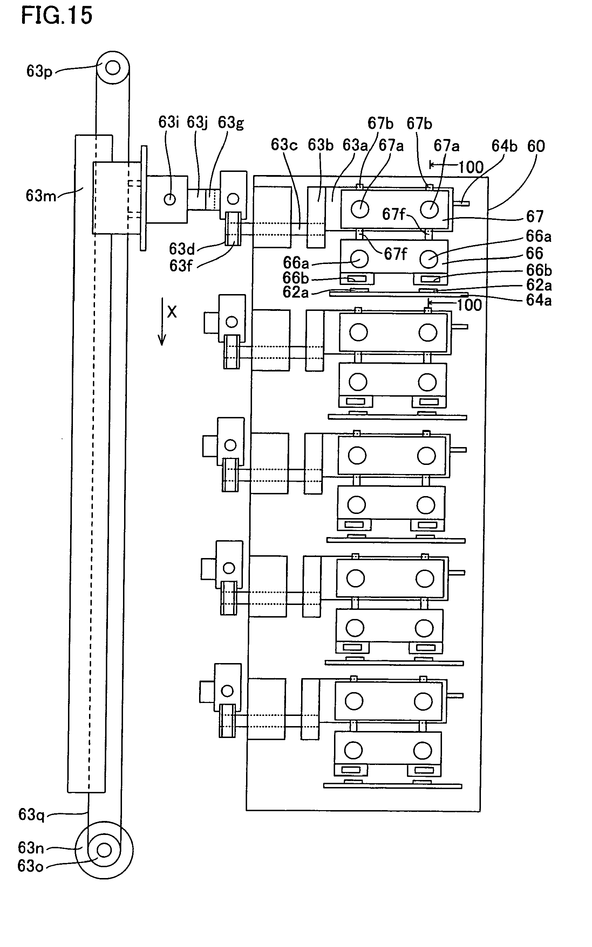

As shown in Figs. 7 and 13, each lid closing mechanism part 63 is provided with a lid closing arm 63a for receiving the lid parts 67a of each detection cell 65. The lid closing arm 63a is integrally mounted on a rotatable member 63b. The rotatable member 63b is mounted on a first end of a shaft 63c to be rotatable about this shaft 63c. A pulley 63d is mounted on a second end of the shaft 63c, as shown in Figs. 13 and 14. Another pulley 63e is rotatably mounted at a prescribed interval from the pulley 63d. A belt 63f is mounted between the pulleys 63d and 63e. A vertically movable member 63g vertically movable following vertical movement of the belt 63f is mounted on this belt 63f. As shown in Fig. 14, a tension spring 63h for downwardly urging the vertically movable member 63g is mounted on this vertically movable member 63g. As shown in Fig. 13, a pressing member 63j is provided for upwardly pressing the vertically movable member 63g thereby upwardly moving the vertically movable member 63g against the urging force of the tension spring 63h (see Fig. 14). This pressing member 63j is rendered vertically movable through a stepping motor 63k and a sliding screw 63i. A torque limiter 631 is provided between the stepping motor 63k and the sliding screw 63i for idling when excess torque is applied. As shown in Fig. 15, a pressing mechanism part consisting of the pressing member 63j, the stepping motor 63k, the torque limiter 631 and the sliding screw 63i is mounted on a direct-acting guide 63m to be movable in the X-axis direction. This pressing mechanism part is moved between the five reaction detection blocks 60a along the X-axis direction through a stepping motor 63n, pulleys 63o and 63p and a timing belt 63q.

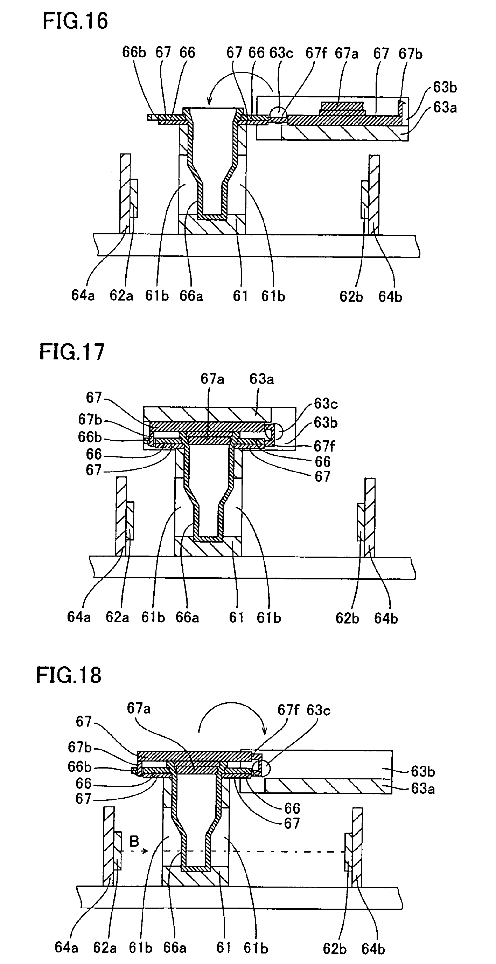

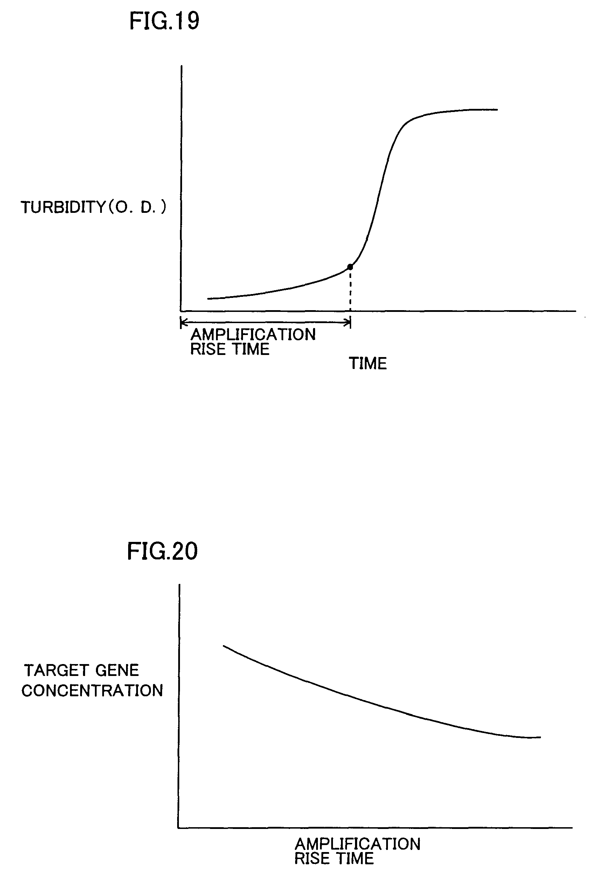

Figs. 16 to 18 are schematic diagrams for illustrating a lid closing operation in the measuring part 101 according to the first embodiment, and Figs. 19 and 20 are graphs for illustrating an operation of detecting gene amplification. Operations of the gene amplifier/detector 100 according to the first embodiment are now described with reference to Figs. 1 to 4, 7 and 13 to 20. The gene amplifier/detector 100 according to the first embodiment amplifies cancer derivation genes (mRNAs) present in resected tissues by the LAMP and detecting the same by measuring turbidity of solutions resulting from the amplification, as hereinabove described. According to this embodiment, the LAMP, which is short-time direct gene amplification, is so employed that an operation of setting samples and detecting reaction can be performed in a short time of about 30 minutes.

As shown in Figs. 2 and 3, the sample containers 22 storing the solubilized extracts (samples) prepared by treating (homogenizing, filtrating and diluting) resected tissues are previously set in the five sample container set holes 21a of the sample container set table 21. Further, the primer reagent container 32a storing the primer reagent of CK 19 (cytokeratin 19) and the enzyme reagent container 32b storing the enzyme reagent of CK 19 are set in the front left primer reagent container set hole 31a and the front left enzyme reagent container set hole 31b respectively. In addition, the primer reagent container 32a storing the primer reagent of β-actin and the enzyme reagent container 32b storing the enzyme reagent of β-actin are set in the front right primer reagent container set hole 31a and the front right enzyme reagent container set hole 31b respectively. The two racks 42 each storing 36 disposable pipette tips 41 are fitted in the recess portion (not shown) of the tip set part 40. In this case, the initial position of the arm part 11 of the dispensing mechanism part 10 is displaced from the upper portion of the tip set part 40 as shown in Figs. 2 and 3, whereby the two racks 42 can be easily fitted in the recess portion (not shown) of the tip set part 40. Further, the two cell parts 66a of each detection cell 65 are set in the two detection cell set holes 61a of the reaction part 61 of each reaction detection block 60a.

Measured items, sample IDs etc. are registered through the keyboard 102a and the mouse 102 of the data processing part 102 shown in Fig. 1, for thereafter starting the operation of the measuring part 101 through the keyboard 102a or the mouse 102b.

When the operation of the measuring part 101 is started, the arm part 11 of the dispensing mechanism part 10 is moved from the initial position to the tip set part 40, so that the two syringe parts 12 of the dispensing mechanism part 10 are downwardly moved on the tip set part 40. Thus, the forward ends of the nozzle parts 12a of the two syringe parts 12 are press-fitted into upper openings of two of the pipette tips 41 as shown in Fig. 4, so that the two pipette tips 41 are automatically mounted on the forward ends of the nozzle parts 12a of the two syringe parts 12. After the two syringe parts 12 are upwardly moved, the arm part 11 of the dispensing mechanism part 10 is moved along the X-axis direction toward a portion above the two primer reagent containers 32a, storing the primer reagents of CK 19 and β-actin respectively, set on the reagent container set table 31. The two syringe parts 12 are so downwardly moved that the forward ends of the two pipette tips 41 mounted on the nozzle parts 12a of the two syringe parts 12 are inserted into the levels of the primer reagents of CK 19 and β-actin stored in the two primer reagent containers 32a respectively. Then, the pump parts 12b of the syringe parts 12 suck the primer reagents of CK 19 and P-actin stored in the two primer reagent containers 32a respectively. When the pump parts 12b suck the primer reagents, the level sensors 12d (see Fig. 4) sense that the forward ends of the pipette tips 41 of conductive resin are in contact with the levels while the pressure sensors 12e (see Fig. 4) sense the suction pressure. In other words, the level sensors 12d and the pressure sensors 12e sense whether or not the pump parts 12b reliably suck the primer reagents.

After the pump parts 12b completely suck the primer reagents and the two syringe parts 12 are upwardly moved, the arm part 11 of the dispensing mechanism part 10 is moved to a portion above the backmost reaction detection block 60a (farthest from the front face of the gene amplifier/detector 100). In this case, the arm part 11 of the dispensing mechanism part 10 is so moved as not to pass through portions above the remaining reaction detection blocks 60a subsequent to the backmost one. The two syringe parts 12 are downwardly moved on the backmost reaction detection block 60a, so that the two pipette tips 41 mounted on the nozzle parts 12a of the two syringe parts 12 are inserted into the two cell parts 66a of the detection cell 65 of this reaction detection block 60a respectively. The pump parts 12b of the syringe parts 12 discharge the two primer reagents of CK 19 and β-actin into the two cell parts 66a respectively. Also at this time, the level sensors 12d sense that the forward ends of the pipette tips 41 of conductive resin are in contact with the levels of the discharged liquids while the pressure sensors 12e sense the discharge pressure. In other words, the level sensors 12d and the pressure sensors 12e sense whether or not the pump parts 12b reliably discharge the primer reagents. The level sensors 12d and the pressure sensors 12e perform sensing similar to the above also when the pump parts 12b suck and discharge the enzyme reagents and the samples as described later.

After the pump parts 12b completely discharge the primer reagents and the two syringe parts 12 are upwardly moved, the arm part 11 of the dispensing mechanism part 10 is moved in the X-axis direction toward a portion above the tip disposal part 50. The pipette tips 41 are disposed on the tip disposal part 50. More specifically, the two syringe parts 12 are downwardly moved so that the pipette tips 41 are inserted into the two tip disposal holes 50a (see Fig. 3) of the tip disposal part 50. In this state, the arm part 11 of the dispensing mechanism part 10 is moved in the Y-axis direction for moving the pipette tips 41 under the groove parts 50b. Then, the two syringe parts 12 are so upwardly moved that flanges provided on the upper surfaces of the pipette tips 41 come into contact with the lower surfaces of both sides of the groove parts 50b and receive downward force from the lower surfaces, to be automatically detached from the nozzle parts 12a of the two syringe parts 12. Thus, the pipette tips 41 are disposed into the tip disposal part 50.

Then, the arm part 11 of the dispensing mechanism part 10 is moved again to the tip set part 40, on which other two pipette tips 41 are newly automatically mounted on the forward ends of the nozzle parts 12a of the two syringe parts 12 similarly to the above. The arm part 11 of the dispensing mechanism part 10 is moved in the X-axis direction toward a portion above the two enzyme reagent containers 32b, storing the two enzyme reagents of CK 19 and β-actin respectively, set on the reagent container set table 31. Then, the two syringe parts 12 are so downwardly moved as to suck the two enzyme reagents of CK 19 and β-actin stored in the two enzyme reagent containers 32b respectively, and thereafter upwardly moved. The arm part 11 of the dispensing mechanism part 10 is moved to the portion above the backmost reaction detection block 60a, so that the pump parts 12b discharge the two enzyme reagents of CK 19 and β-actin into the two cell parts 66a of the detection cell 65 of this reaction detection block 60a respectively. Also in this case, the arm part 11 of the dispensing mechanism part 10 is so moved as not to pass through the portions above the remaining four reaction detection blocks 60a subsequent to the backmost one. After the pump parts 12b discharge the enzyme reagents, the arm part 11 of the dispensing mechanism part 10 is moved toward the portion above the tip disposal part 50, for disposing the pipette tips 41.

Then, the arm part 11 of the dispensing mechanism part 10 is moved again to the tip set part 40, so that further two pipette tips 41 are newly automatically mounted on the forward ends of the nozzle parts 12a of the two syringe parts 12. Then, the arm part 11 of the dispensing mechanism part 10 is moved in the X-axis direction toward a portion above the sample containers 22, storing the samples, set on the sample container set table 21 for sucking the samples from the sample containers 22. More specifically, the first syringe part 12 located above one of the sample containers 22 is downwardly moved for sucking the sample contained therein, and thereafter upwardly moved. Then, the arm part 11 of the dispensing mechanism part 10 is moved in the Y-axis direction for locating the second syringe part 12 above the same sample container 22. The second syringe part 12 is downwardly moved for sucking the sample from the same sample container 22, and thereafter upwardly moved. Then, the arm part 11 of the dispensing mechanism part 10 is moved toward the portion above the backmost reaction detection block 60a, for thereafter downwardly moving the two syringe part 12 and for discharging the same sample into the two cell parts 66a of the detection cell 65. Also in this case, the arm part 11 of the dispensing mechanism part 10 is so moved as not to pass through the portions above the remaining four reaction detection blocks 60a.

Every time the sample is discharged into the two cell parts 66a of the detection cell 65, the pump parts 12b of the two syringe parts 12 repeat suction and discharge a plurality of times, thereby stirring the primer reagents of CK 19 and β-actin and the sample stored in the two cell parts 66a. When the primer reagents, the enzyme reagents and the sample are dispensed, the temperature of the liquid in the detection cell 65 is held at about 20° through the Peltier module 61c shown in Fig. 7. Thereafter the arm part 11 of the dispensing mechanism part 10 is moved to the portion located above the tip disposal part 50, for disposing the pipette tips 41.

After the primer reagents, the enzyme reagents and the sample are discharged into the cell parts 66a as described above, the lid parts 67a of the detection cell 65 are closed. This lid closing operation is now described in detail with reference to Figs. 7 and 13 to 18. Referring to Figs. 7 and 16, the lid parts 67a are open immediately after the pump parts 12b discharge the primer reagents, the enzyme reagents and the sample into the cell parts 66a. From this state, the stepping motor 63k shown in Figs. 7 and 13 is rotated/driven in a prescribed direction, thereby rotating the sliding screw 63i. Thus, the pressing member 63j is upwardly moved thereby upwardly moving the vertically movable member 63g (see Fig. 13) against the urging force of the tension spring 63h (see Fig. 14). This upward movement of the upwardly moving member 63g is converted to rotation of the shaft 63c through the belt 63f and the pulley 63d. Thus, the rotatable member 63b mounted on the shaft 63c is rotated along arrows shown in Figs. 7 and 16 about the shaft 63c, thereby also rotating the lid closing arm 63a mounted on the rotatable member 63b along arrows about the shaft 63c. Therefore, the lid parts 67a of the lid member 67 of the detection cell 65 placed on the lid closing arm 63a are rotated toward the cell parts 66a of the detection cell 65, and closed with respect to the cell parts 66a as shown in Fig. 17. When at least constant force is applied to the lid parts 67a closed with respect to the cell parts 66a, the torque limiter 631 shown in Fig. 13 so idles that the lid parts 67a or the cell parts 66a can be prevented from application of excess force. Thus, the lid parts 67a or the cell parts 66a can be prevented from breakage or deformation in the lid closing operation. Once the lid parts 67a are closed, the hook parts 67b and the hook engaging holes 66b engage with each other to keep the lid parts 67a closed, thereby preventing the lid parts 67a from reopening.

Thereafter the stepping motor 63k shown in Figs. 7 and 13 is rotated/drive oppositely to the prescribed direction for downwardly moving the pressing member 63j, whereby the vertically movable member 63g (see Fig. 13) is downwardly moved due to the urging force of the tension spring 63h (see Fig. 14). Thus, the shaft 63c is oppositely rotated thereby rotating the rotatable member 63b mounted on the shaft 63 along arrow shown in Fig. 18 about the shaft 63c. Thus, the rotatable member 63b and the lid closing arm 63a return to the initial positions as shown in Fig. 18. This lid closing operation for the detection cell 65 is performed after the primer reagents, the enzyme reagents and the sample are discharged into the detection cell 65 of the backmost reaction detection block 60a before primer reagents, enzyme reagents and a sample are discharged into the detection cell 65 of the second backmost reaction detection block 60a.

After the aforementioned lid closing operation is terminated, the temperature of the liquids in the detection cell 65 is increased from about 20°C to about 65°C through the Peltier module 61c shown in Fig. 7, thereby amplifying the target nucleic acid (mRNA) through LAMP (gene amplification) reaction. Whitening resulting from magnesium pyrophosphate formed following amplification is turbidimetrically detected. More specifically, The LED light source part 62a emits light of about 1 mm in diameter to the cell parts 66a of the detection cell 65 in amplification along arrow B (see Figs. 8 and 18) through the light application grooves 61b of the reaction part 61 as shown in Fig. 18. The photodiode part 62b receives the emitted light. Thus, the turbidity of the liquids in the cell parts 66a of the detection cell 65 in amplification is detected (monitored) in real time. Fig. 19 shows measured data obtained in the data processing part 102 (see Fig. 1) with time and turbidity (O.D.: optical density) indicated on the axes of ordinate and abscissa respectively. An amplification rise time indicating the time up to sudden increase of the number of copies of the target nucleic acid (mRNA) in the sample is detected from the measured data on the basis of change of turbidity. The concentration of the target gene is calculated from the amplification rise time on the basis of the calibration curve previously created from the results of measurement through the calibrator as shown in Fig. 20. Referring to Fig. 20, the axes of abscissa and ordinate show the amplification rise time and the target gene concentration respectively. In general, the target gene concentration is increased as the amplification rise time is reduced.

The container storing the calibrator containing the target gene having the prescribed concentration as the standard for creating the calibration curve and the container storing the negative control for confirming that the gene not to be amplified is not normally amplified are set in the sample container set holes 21a of the sample container set table 21 at prescribed frequency. Operations similar to the aforementioned ones for sucking, discharging and detecting the sample are performed as to the calibrator and the negative control. The calibration curve can be created through the operation of detecting the calibrator while it is possible to confirm that the gene not to be amplified is not normally amplified through the operation of detecting the negative control.

Thus, the target gene (nucleic acid) is detected in the backmost reaction detection block 60a. In parallel with the operation of detecting the target gene (nucleic acid) in the backmost reaction detection block 60a after the lid closing operation, an operation of dispensing primer reagents, enzyme reagents and a sample, a lid closing operation and an operation of detecting a target gene are performed as to the second backmost reaction detection block 60a. In parallel with the operation of detecting the target gene in the second backmost reaction detection block 60a after the lid closing operation, an operation of dispensing primer reagents, enzyme reagents and a sample, a lid closing operation and an operation of detecting a target gene (nucleic acid) are performed as to the third backmost reaction detection block 60a. Thereafter operations similar to the above are successively performed also as to the fourth and fifth backmost reaction detection blocks 60a. In this case, the stepping motor 63m shown in Fig. 15 is driven for successively moving the pressing mechanism part to the second to fifth backmost reaction detection blocks 60a for performing lid closing operations. After the operation of detecting a target gene is terminated in the fifth backmost reaction detection block 60a, the detection is terminated. Thereafter the grip parts 67c of the detection cells 65 are grasped for disposing the five detection cells 65.

According to the first embodiment, as hereinabove described, the dispensing mechanism part 10 movable in the X- and Y-axis directions (plane directions) and the Z-axis direction (vertical direction) is provided while the sample container set part 20, the reagent container set part 30 and the tip set part 40 are arranged along the X-axis direction and the five reaction detection blocks 60a and the tip disposal part 50 are arranged along the X-axis direction on the positions separated from the sample container set part 20, the reagent container set part 30 and the tip set part 40 at the prescribed intervals in the Y-axis direction so that the sample container set part 20, the reagent container set part 30, the tip set part 40, the tip disposal part 50 and the five reaction detection blocks 60a can be quadratically (rectangularly) arranged, whereby the moving range of the dispensing mechanism part 10 in the X- and Y-axis directions can be set in the range of the quadratic arrangement. Thus, the moving range of the dispensing mechanism part 10 in the X- and Y-axis directions can be so reduced that the measuring part 101 allows miniaturization and sufficiently prompt analysis.

According to the first embodiment, further, the sample container set part 20 is arranged closer to the front face of the measuring part 101 while the reagent container set part 30 is arranged farther from the front face of the measuring part 101 so that samples requiring careful handling due to a possibility of infection or the like can be easily handled since the portion closer to the front face of the measuring part 101 is easily reachable.

According to the first embodiment, as hereinabove described, the sample analyzer (the gene amplifier/detector 100) is constituted of the measuring part 101 and the data processing part 102, connected with the measuring part 101 through the communication line, having the function of processing data detected in the reaction detection part 60 of the measuring part 101 so that the data processing part 102 can easily process the data detected in the measuring part 101, whereby prompt data processing can be performed. Further, the data processing part 102 can also start the operations of the measuring part 101, whereby operability can be improved.

According to the first embodiment, as hereinabove described, the arm part 11 of the dispensing mechanism part 10 moved to the portion above a prescribed reaction detection block 60a for making discharge is so moved as not to pass through the portions above the remaining four reaction detection blocks 60a, whereby the pump parts 12b discharging the sample and the reagents into the detection cell 65 of the prescribed reaction detection block 60a can be prevented from mixing the reagents and the sample to be discharged into the detection cell 65 of the prescribed reaction detection block 60a into the detection cells 65 of the remaining reaction detection blocks 60a and causing contamination.

According to the first embodiment, as hereinabove described, the detection cell set holes 61a closest to the front face of the gene amplifier/detector 100 are arranged on the same Y-axis line as the sample container set hole 21a closest to the front face of the gene amplifier/detector 100 so that the dispensing mechanism part 10 moves toward the front face of the gene amplifier/detector 100 along the X-axis direction in the same range as to the reaction detection part 60 and the sample container set part 20, whereby the moving range of the dispensing mechanism part 10 along the X-axis direction can be minimized. Thus, the measuring part 101 can be further miniaturized and the moving time of the dispensing mechanism part 10 can be reduced. This reduction of the moving time of the dispensing mechanism part 10 allows prompter treatment.

According to the first embodiment, as hereinabove described, the lid closing mechanism part 63 is provided for closing the lid parts 67a of the detection cells 65 so that the lid closing mechanism part 63 performs the lid closing operation after the primer reagents, the enzyme reagents and the sample are discharged into the prescribed detection cell 65 and before the primer reagents, the enzyme reagents and the sample are discharged into the subsequent detection cell 65, whereby the prescribed detection cell 65 can be reliably prevented from contamination.

According to the first embodiment, as hereinabove described, the syringe parts 12 of the dispensing mechanism 10 are provided with the nozzle parts 12a detachably mounted with the pipette tips 41 on the forward ends thereof so that contamination can be prevented by exchanging the pipette tips 41 detachably mounted on the nozzle parts 12a of the syringe parts 12 every sample or reagent.

According to the first embodiment, the tip set part 40, the sample container set part 20 and the reagent container set part 30 are arranged along the X-axis direction so that the sample or the reagents can be sucked from the sample container 22 or the primer reagent containers 23a and the enzyme reagent containers 23b by simply moving the dispensing mechanism part 10 in the X-axis direction after mounting the pipette tips 41 on the nozzle parts 12a of the syringe parts 12 of the dispensing mechanism part 10 on the tip set part 40, whereby prompter treatment can be performed.

According to the first embodiment, as hereinabove described, the tip disposal part 50 and the reaction detection blocks 60a of the reaction detection part 60 are arranged along the X-axis direction so that the dispensing mechanism part 10 can be moved to the tip disposal part 50 by simply moving the dispensing mechanism part 10 in the X-axis direction after discharging the reagents or the sample into each detection cell 65, whereby movement to the position for disposing the pipette tips 41 can be promptly performed after discharge of the reagents or the sample. Prompt treatment can be performed also by this.

According to the first embodiment, as hereinabove described, the two syringe parts 12 are provided on the dispensing mechanism part 10 while the two primer reagent container set holes 31a and the two enzyme reagent container set holes 31b are provided on the reagent container set table 31 at the prescribed intervals along the Y-axis direction and the two cell parts 66a are provided on each detection cell 65 so that the sample or the reagents can be simultaneously discharged into the two cell parts 66a, whereby the throughput can be improved in suction or dispensation. Thus, prompter treatment can be performed.

According to the first embodiment, as hereinabove described, the lid closing mechanism 63 is provided for closing the lid parts 67a of each detection cell 65 after the reagents and the sample are completely dispensed into the detection cell 65 so that amplification of the target gene stored in the detection cell 65 and detection of the concentration thereof are performed while closing the lid parts 67a, whereby the amplified target gene can be effectively prevented from contaminating the remaining samples or reagents.

According to the first embodiment, the detection cells 65 integrally provided with the lid parts 67a are so employed that no lid parts 67a fall on the remaining detection cells 65, whereby the samples or reagents in the remaining detection cells 65 can be prevented from contamination resulting from a fall of the lid parts 67a or the like.

According to the first embodiment, as hereinabove described, the turbidity detection part 62 detecting the turbidity of the liquid in each detection cell 65 is constituted of the LED light source part 62a and the photodiode part 62b, whereby the presence of the amplified target gene in the detection cell 65 can be easily detected. In this case, the turbidity of the liquid in the detection cell 65 is detected (monitored) through the LED light source part 62a and the photodiode part 62b in real time in amplification, whereby the turbidity of the liquid can be more correctly detected. Thus, detection accuracy for the amplification rise time can be so improved as to improve detection accuracy for the concentration of the target gene.

According to the first embodiment, as hereinabove described, the reaction part 61 amplifies the target gene by the LAMP, i.e., short-time direct gene amplification, whereby the time required for detecting the target gene can be reduced. In other words, the operation of setting the sample and detecting reaction can be performed in a short time of about 30 minutes due to the employment of the LAMP according to the first embodiment.

According to the first embodiment, as hereinabove described, the reaction part 61 amplifies the target gene and the turbidity detection part 62 detects the target gene on the same position, whereby the structure of the gene amplifier/detector 100 can be simplified as compared with a case of amplifying the target gene with the reaction part 61 and detecting the target gene with the turbidity detection part 62 on different positions while the treatment time can be reduced due to no movement of detection containers from the amplification position to the detection position.

According to the first embodiment, as hereinabove described, the reaction part 61 amplifies the target gene and the turbidity detection part 62 detects the same in parallel with each other, whereby the time for amplifying and detecting the target gene can be reduced.

According to the first embodiment, as hereinabove described, the lid closing mechanism part 63 performs the lid closing operation only once for each detection cell 65 without further opening the lid parts 67a, whereby prompt treatment can be performed due to inclusion of no step of opening the lid parts 67a.

### (Second Embodiment)

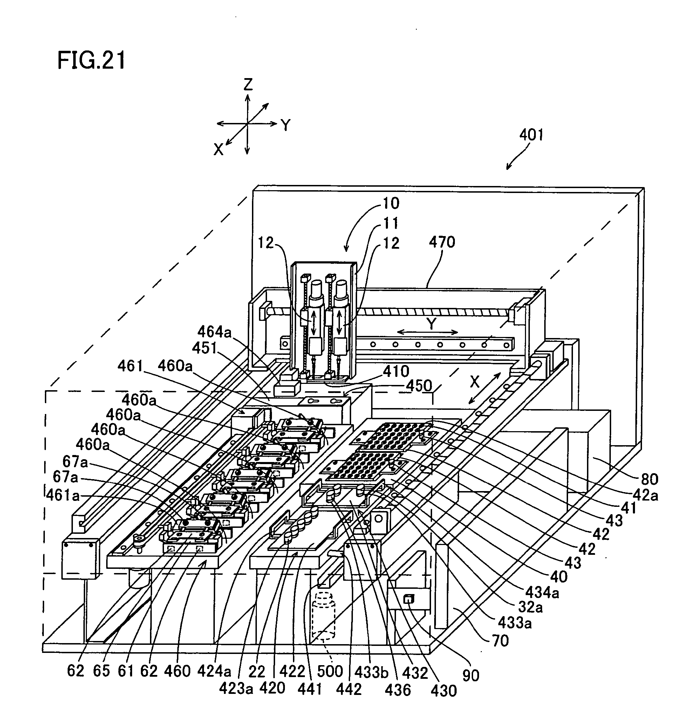

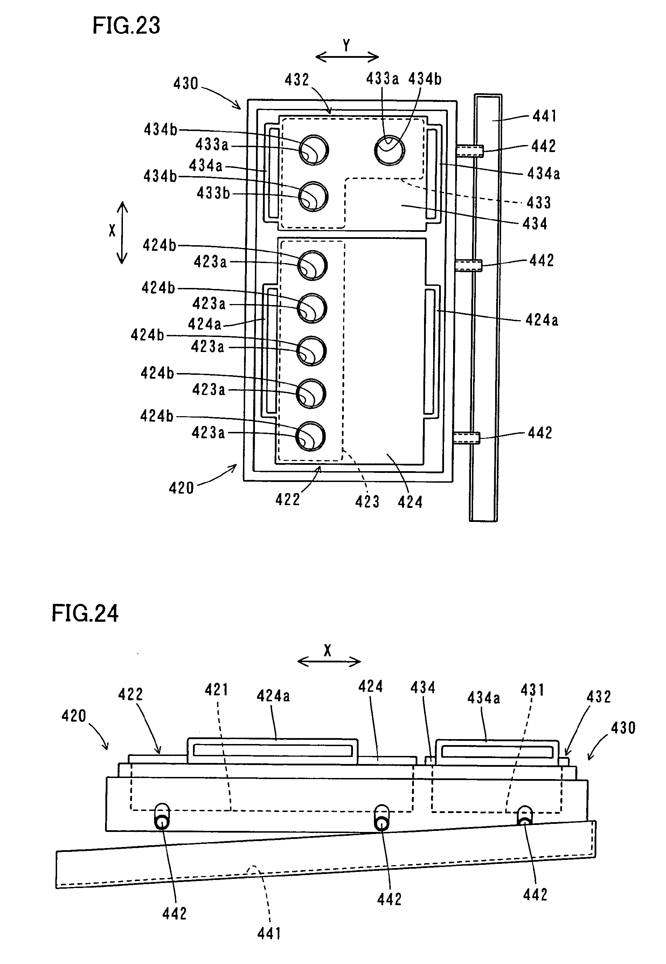

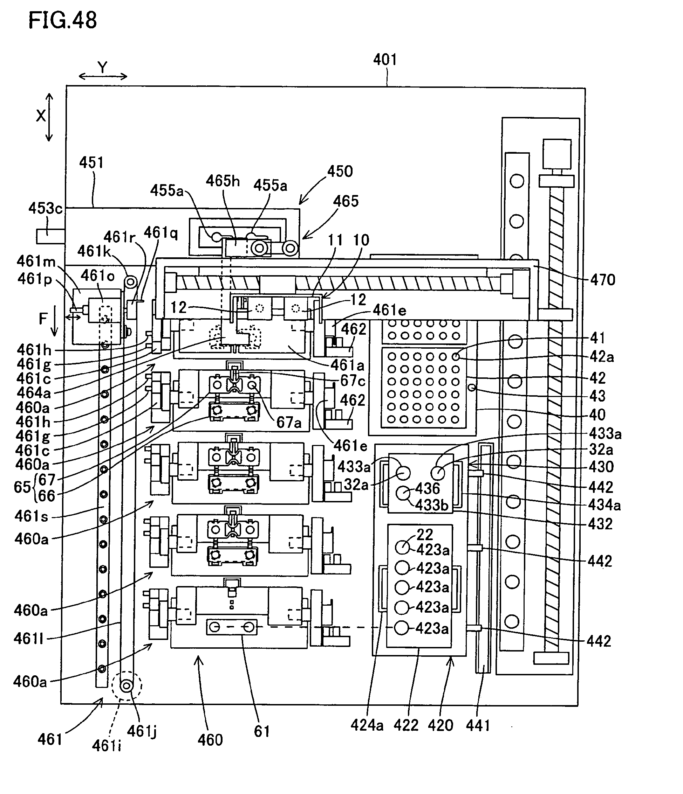

Fig. 21 is a perspective view showing the overall structure of a measuring part 401 of a gene amplifier/detector (sample analyzer/nucleic acid detector) according to a second embodiment of the present invention. Figs. 23 to 46 detailedly illustrate parts constituting the measuring part 401 of the gene amplifier/detector according to the second embodiment shown in Fig. 21, and Figs. 47 and 48 are plan views for illustrating operations of the measuring part 401 of the gene amplifier/detector according to the second embodiment shown in Fig. 21. Referring to Figs. 21, 22, 35 and 41, the measuring part 401 according to the second embodiment is provided with a condensed water discharge mechanism for discharging condensed water from a sample container set part 420 and a reagent container set part 430, a tip disposal part 450 including a tip disposal bag 452 and a droplet removing member 410 for removing droplets formed on the forward ends of pipette tips 41 when discharging a sample into cell parts 66a of each detection cell 65 while a lid closing mechanism part 461 of a reaction detection part 460 has a structure different from that in the first embodiment, dissimilarly to the aforementioned first embodiment. The remaining structure of the second embodiment is basically similar to that of the first embodiment. Further, operations of the second embodiment other than a tip disposal bag set operation, a droplet removing operation and a lid closing operation are basically similar to those of the aforementioned first embodiment. The second embodiment is now described in detail.

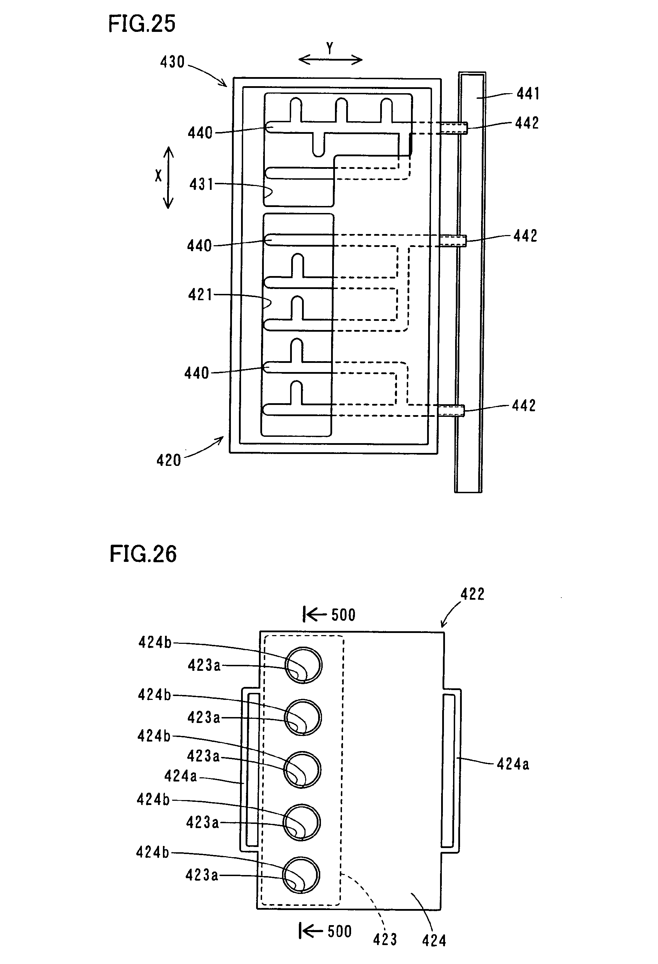

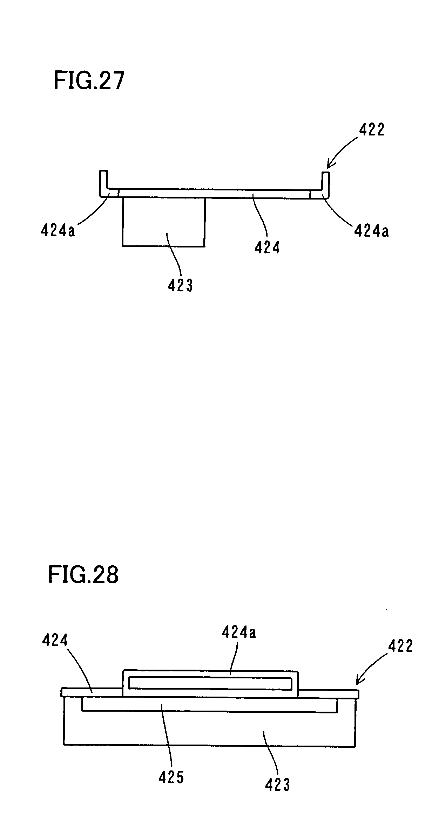

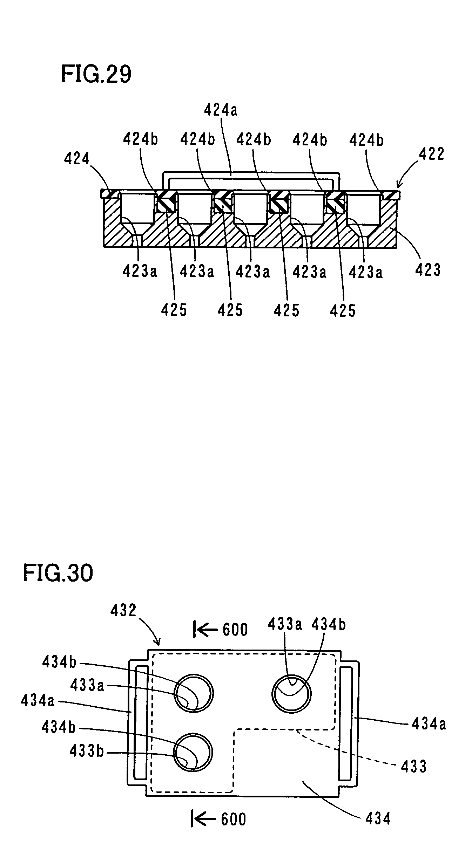

First, the sample container set part 420, the reagent container set part 430 and the condensed water discharge mechanism therefor according to the second embodiment are described with reference to Figs. 21 to 33. According to the second embodiment, a sample container set table 422 is detachably fitted in a recess portion 421 of the sample container set part 420, as shown in Figs. 21 to 25. As shown in Figs. 26 to 29, the sample container set table 422 is constituted of an aluminum pedestal 423, a transparent resin plate 424 and heat insulators 425. The aluminum pedestal 423 has five sample container set holes 423a, as shown in Figs. 26 and 29. Sample containers 22 (see Fig. 21) similar to those in the aforementioned first embodiment are set in the five sample container set holes 423a respectively. The resin plate 424 constituting the sample container set table 422 has two grip parts 424a and five through holes 424b formed on positions corresponding to the five sample container set holes 423a of the pedestal 423 respectively. The heat insulators 425 are arranged between the plate 424 and the pedestal 423 to enclose the five sample container set holes 423a, as shown in Figs. 28 and 29.

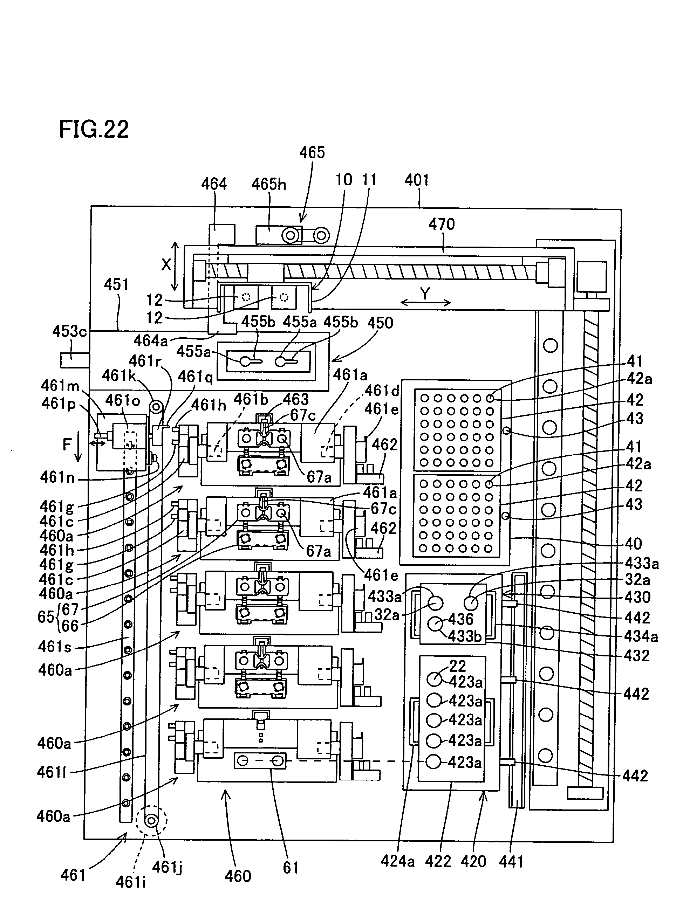

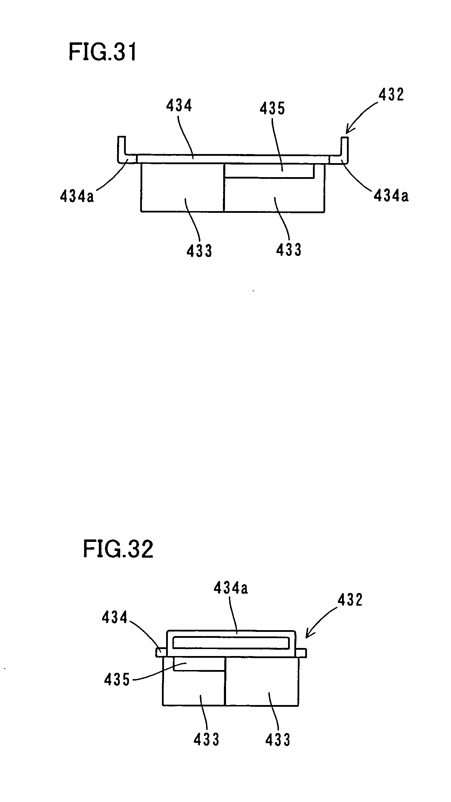

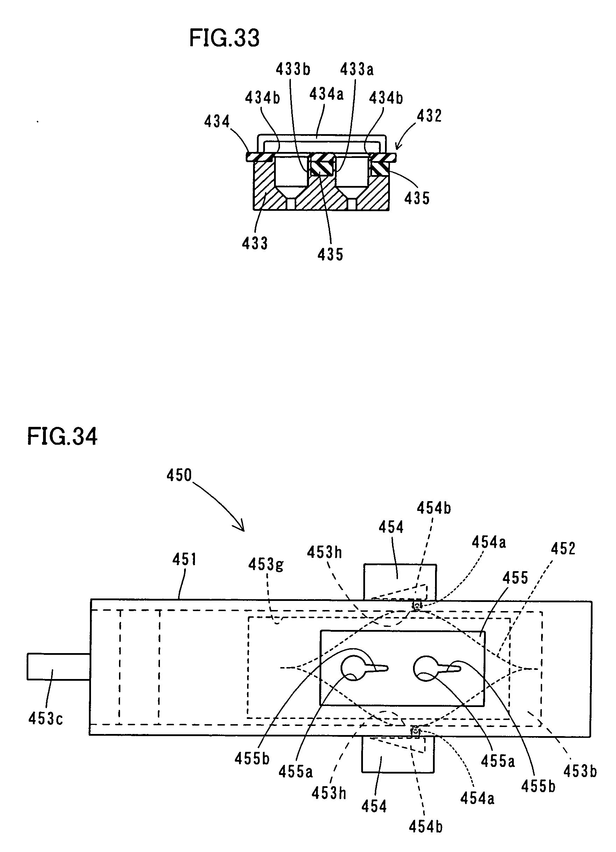

As shown in Figs. 23 and 25, a reagent container set table 432 is detachably fitted in a recess portion 431 of the reagent container set part 430. The reagent container set table 432 is constituted of an aluminum pedestal 433, a transparent resin plate 434 and heat insulators 435, as shown in Figs. 30 to 33. As shown in Figs. 30 and 33, the aluminum pedestal 433 has two primer reagent container set holes 433a and a single enzyme reagent container set hole 433b. As shown in Figs. 21 and 22, the two primer reagent container set holes 433a are provided at a prescribed interval along a Y-axis direction, while the enzyme reagent container set hole 433b is provided only on the front left side. An enzyme reagent container 436 storing an enzyme reagent common to cytokeratin 19 (CK 19) and β-actin is arranged in the enzyme reagent container set hole 433b. Primer reagent containers 32a arranged in the two primer reagent container set holes 433a are similar to those in the aforementioned first embodiment. As shown in Figs. 30 and 33, the resin plate 434 constituting the reagent container set table 432 has two grip parts 434a and three through holes 434b formed on positions corresponding to the two primer reagent container set holes 433a and the single enzyme reagent container set hole 433b of the pedestal 433 respectively. As shown in Figs. 31 to 33, the heat insulators 435 are arranged between the plate 434 and the pedestal 433 to enclose the two primer reagent container set holes 433a and the single enzyme reagent container set hole 433b.

As shown in Fig. 25, a plurality of water collecting grooves 440 are formed on each of the bottom surfaces of the recess portions 421 and 431 of the sample container set part 420 and the reagent container set part 430. The plurality of water collecting grooves 440 are provided through the inner side surface of the recess portion 421 or 431 and the outer side surface of the sample container set part 420 or the reagent container set part 430. Drain pipes 442 downwardly inclined toward the forward ends are coupled to ends of the water collecting grooves 440 located on the outer side surface of the sample container set part 420 or the reagent container set part 430.

As shown in Figs. 23 and 25, a troughlike drain 441 extending along an X-axis direction is formed under the forward ends of the drain pipes 442. This troughlike drain 441 is downwardly inclined toward the front face of the gene amplifier/detector, as shown in Figs. 21 and 24. The water collecting grooves 440, the drain 441 and the drain pipes 442 constitute a condensed water discharge mechanism. This condensed water discharge mechanism is so provided as to discharge condensed water formed on the surfaces of the aluminum pedestals 423 and 433 of the sample container set table 422 and the reagent container set table 432 respectively from the sample container set table 422 and the reagent container set table 432 through the water collecting grooves 440, the drain pipes 442 and the drain 441. A condensed water receiver 500 is set under the forward ends of the drain 441, as shown in Fig. 21.

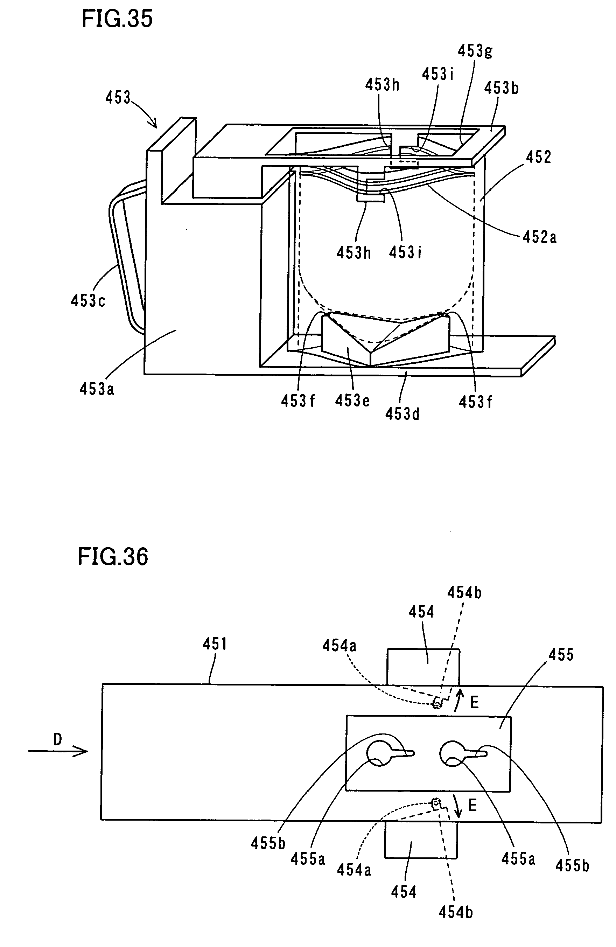

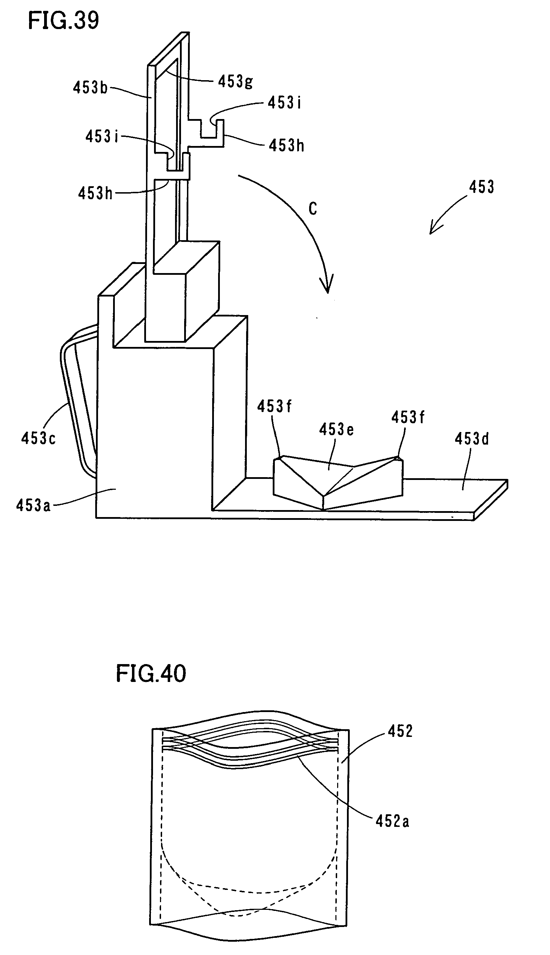

The tip disposal part 450 according to the second embodiment is now described with reference to Figs. 21, 22and 34 to 40. The tip disposal part 450 shown in Figs. 21 and 22 is provided with a boxlike storage part 451, the tip disposal bag 452 arranged in the storage part 451, a bag set table 453 for setting the tip disposal bag 452, bag sensors 454 and a disposal hole forming part 455, as shown in Figs. 34 to 37. The tip disposal bag 452 is formed with a fastener 452a for rendering the tip disposal bag 452 openable/closable, as shown in Figs. 35 and 40.

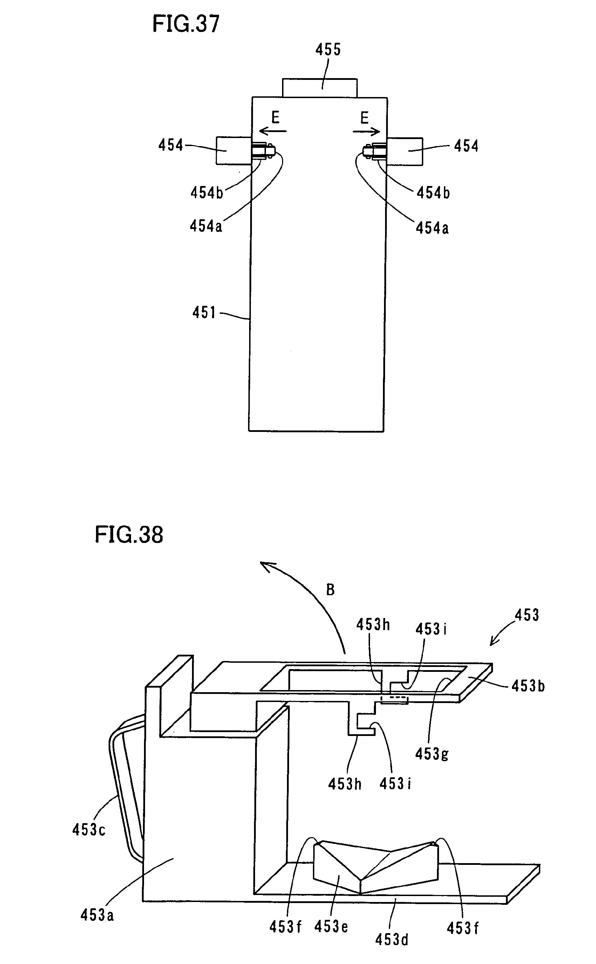

As shown in Figs. 38 and 39, the bag set table 453 is constituted of an L-shaped body part 453a, a bag holding member 453b rotatably mounted on the upper portion of the body part 453a and a handle 453c mounted on the outer surface of the body part 453a. A resin fulcrum 453e is mounted on the bottom surface 453d of the L-shaped body part 453a. The resin fulcrum 453e is shaped along the concave outer bottom surface of the tip disposal bag 452 and has two chamfers 453f for preventing the tip disposal bag 452 from damage, as shown in Fig. 35. The bag holding member 453 has a through hole 453g and a pair of overhangs 453h downwardly extending from prescribed positions opposed to each other through the through hole 453g. As shown in Fig. 35, the pair of overhangs 453h are formed to come into contact with the inner surface of the tip disposal bag 452 set on the bag set table 453 for keeping the upper portion of the tip disposal bag 452 open. The pair of overhangs 453h are formed with U-shaped notches 453i. As shown in Fig. 35, the bottom surface 453d of the body part 453a mounted with the fulcrum 453e and the bag holding member 453b having the overhangs 453h vertically hold the tip disposal bag 452 therebetween, thereby fixing the same.

As shown in Figs. 36 and 37, the bag sensors 454 are mounted on the outer side surfaces of the boxlike storage part 451 to be opposed to each other through the storage part 451. These bag sensors 454 are provided for sensing whether or not the tip disposal bag 452 is normally set on the bag set table 453 fitted in the storage part 451. The bag sensors 454 have rotatable members 45b mounted on pulleys 454a on prescribed positions. The rotatable members 454b and the pulleys 454a are provided to project into the storage part 451 via through holes (not shown) provided on the side surfaces of the storage part 451. The pulleys 454a for the rotatable members 454b are arranged on positions corresponding to those of the notches 453i of the bag set table 453 fitted in the storage part 451.

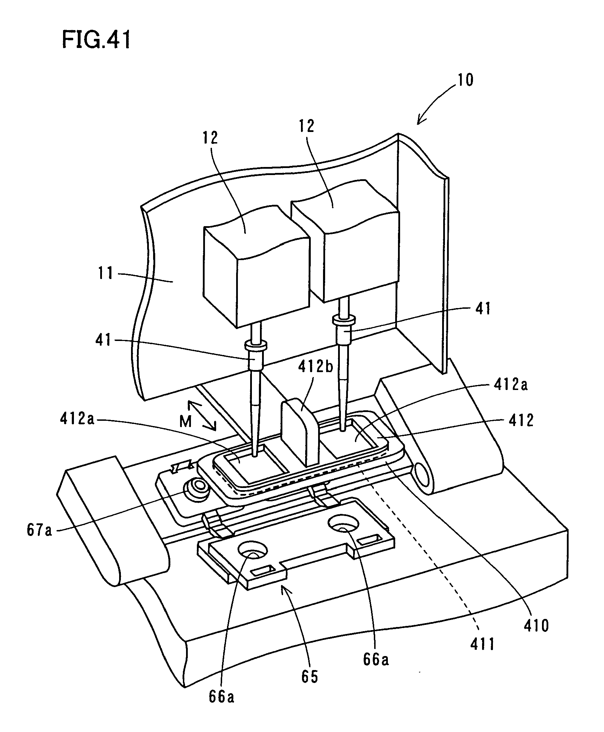

The droplet removing member 410 according to the second embodiment is now described with reference to Figs. 21 and 41. According to the second embodiment, the droplet removing member 410 projectable in the X-direction (along arrow M in Fig. 41) with respect to a dispensing mechanism part 10 is provided under the dispensing mechanism part 10, as shown in Figs. 21 and 41. This droplet removing member 410 is provided for receiving droplets dripping from the forward ends of the pipette tips 41 when discharging samples into cell parts 66a of detection cells 65. As shown in Fig. 41, the droplet removing member 410 is provided with a concave mounting part 411, in which a resin drip pan member 412 is detachably fitted. The drip pan member 412 has two recess portions 412a and a grip part 412b formed between the two recess portions 412a. The two recess portions 412a of the drip pan member 412 are provided at a prescribed interval to be located under two pipette tips 41 mounted on two syringe parts 21 of the dispensing mechanism 10 upon projection of the droplet removing member 410.

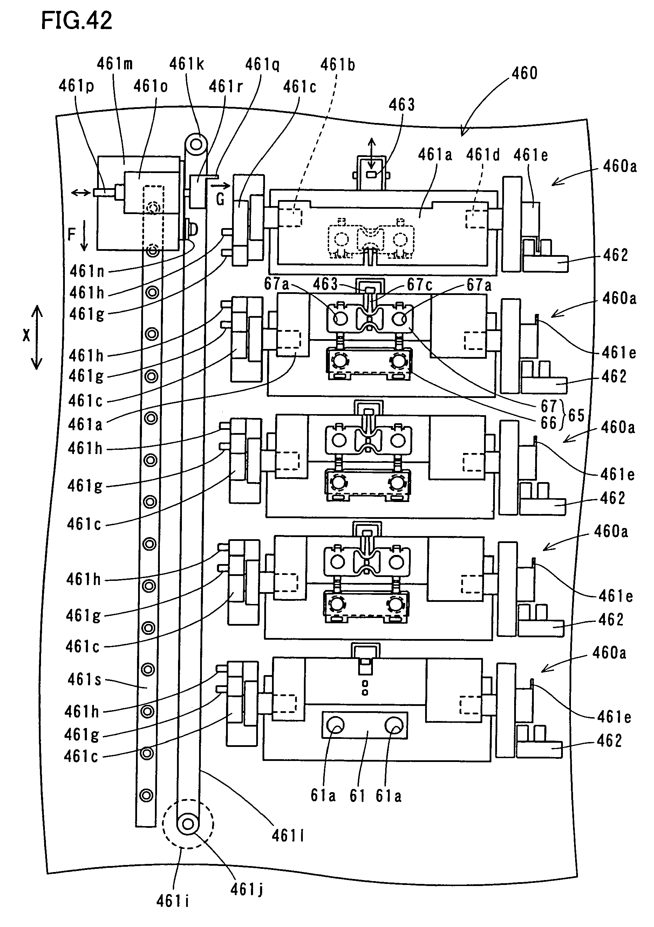

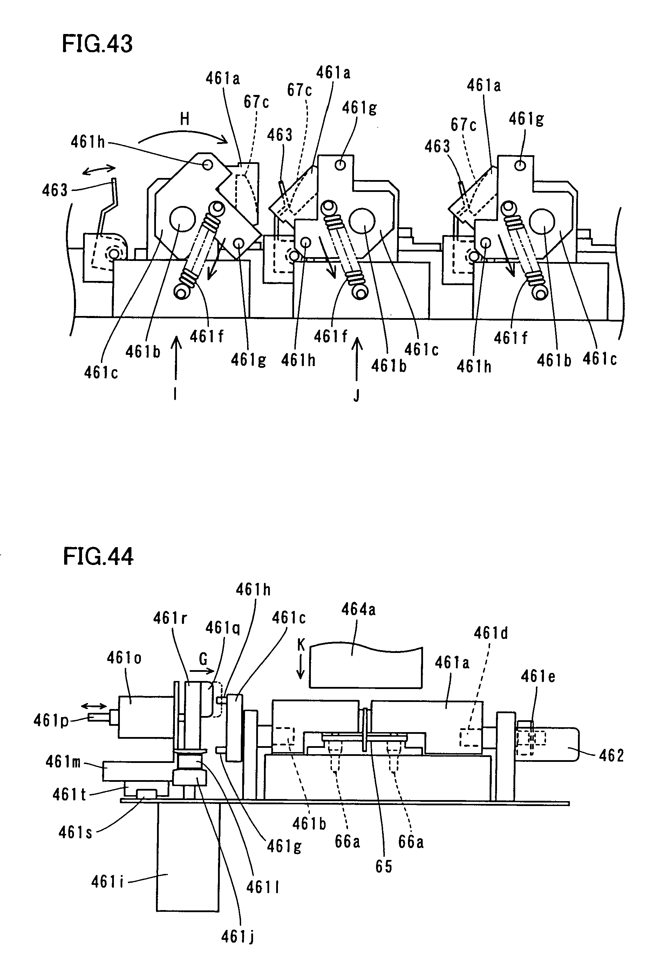

The structure of the lid closing mechanism part 461 of the reaction detection part 460 according to the second embodiment is now described with reference to Figs. 21, 22and 42 to 44. As shown in Figs. 21, 22 and 42, the lid closing mechanism 461 is provided with lid support members 461a for receiving lid parts 67a of lid members 67 of the detection cells 65. As shown in Fig. 42, rotatable members 461c are mounted on first side ends of the lid support members 461a through support shafts 461b. Further, sensing segments 461e are mounted on second side ends of the lid support members 461a through support shafts 461d. Light-transmittable sensors 462 are provided in the vicinity of the sensing segments 461e. The sensors 462 detect whether or not the lid members 67 of the detection cells 65 are closed by sensing that the sensing segments 461e reach prescribed rotating positions. As shown in Fig. 43, the rotatable members 461c mounted on the first side ends of the lid support members 461 are downwardly urged by tension springs 461f. The tension springs 461f are so provided as to downwardly urge the rotatable members 461c about the support shafts 461b either in a state I (the lid members 67 of the detection cells 65 are closed) or a state J (the lid members 67 of the detection cells 65 are not closed) in Fig. 43.

As shown in Figs. 42 and 43, two projections 461 and 46h are formed on prescribed positions of the outer side surface of each rotatable member 461c. When each rotatable member 461c is in the state J (the lid members 67 of the detection cells 65 are not closed) in Fig. 43, the projection 461g is located on a prescribed upper position while the projection 461h is located on a prescribed lower position. When each rotatable member 461c is in the state I (the lid members 67 of the detection cells 65 are closed) in Fig. 43, on the other hand, the projection 461h is located on the prescribed upper position while the projection 461g is located on the prescribed lower position.

Each reaction detection block 460a is provided with a sensor (microswitch) 463 for detecting whether or not the lid member 67 of each detection cell 65 is set on each lid support member 461a, as shown in Figs. 42 and 43. The sensor 463 is provided on a position coming into contact with the grip part 67c of the lid member 67 of the detection cell 65 set on the lid support member 461a.

As shown in Figs. 22, 42 and 44, rotatable pulleys 461j and 461k are arranged on the side provided with the rotatable member 461c at a prescribed interval along the X-axis direction. A stepping motor 461i for rotating/driving the pulley 461j is provided under the pulley 461h. A belt 4611 is mounted between the pulleys 461j and 461k. An electromagnetic valve mounting member 461m is mounted on the belt 4611 through a belt mounting part 461n. This electromagnetic valve mounting member 461m is further mounted on a slider 461t (see Fig. 44) mounted on a rail part 461s of a direct-acting guide to be slidable in the X-axis direction. An electromagnetic valve 461o is mounted on the electromagnetic valve mounting member 461m. A pressing member 461r having a flat pressing part 461q projecting toward the rotatable member 461c is mounted on an end of a movable shaft 461p of the electromagnetic valve 461c closer to the rotatable member 461c. The pressing part 461q of this pressing member 461r is moved by the belt 4611 along arrow F in Fig. 42 in a state moved by the electromagnetic valve 461o along arrow G in Fig. 44, to be capable of pressing the projection 461g or 461h of the rotatable member 461c. In this case, the pressing member 461q comes into contact with only the upper one of the two projections 461g and 461h of the rotatable member 461c. As shown in Fig. 21, each lid support member 461a is so arranged that the lid parts 67a of each detection cell 65 are inclined by 45° from the horizontal direction when the detection cell 65 is set on the reaction part 61 while opening the lid parts 67a. Thus, the user can easily set and remove each detection cell 65 on and from the reaction part 61. The lid parts 67a, most preferably inclined by about 45°, can be easily set and removed when the same are inclined in the range of 30° to 60°.

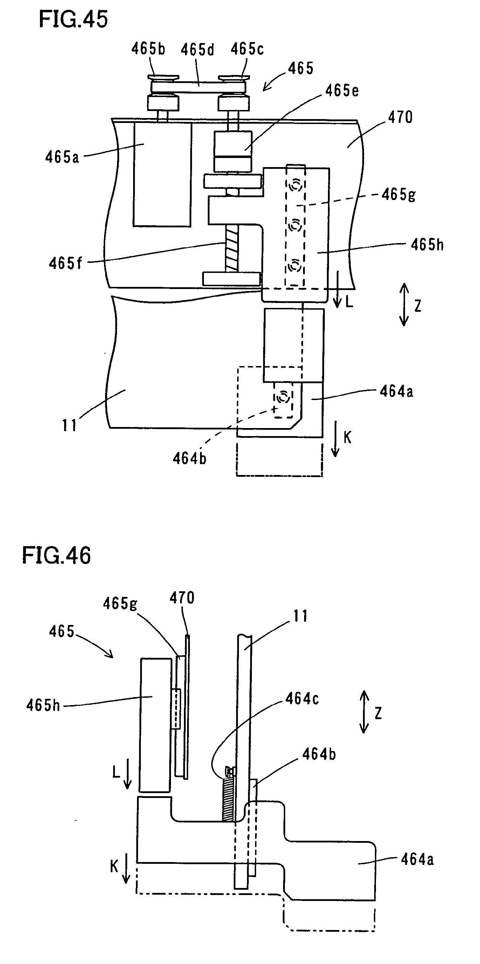

As shown in Figs. 21, 22, 45 and 46, a lid pressing member 464a is mounted on the arm part 11 of the dispensing mechanism part 10 to be movable in a Z-axis direction (vertical direction) through a direct-acting guide 464b. A tensile spring 464c upwardly urges the lid pressing member 464a, as shown in Fig. 46. Further, a pressing member driving part 465 is provided on the back surface of a frame 470 supporting the dispensing mechanism part 10 for downwardly pressing the lid pressing member 464a thereby downwardly moving the same against the urging force of the tension spring 464c (see Fig. 46), as shown in Figs. 22, 45 and 46. This pressing member driving part 465 includes a stepping motor 465a, pulleys 465b and 465c, a belt 465d, a torque limiter 465e, a sliding screw 465f, a direct acting guide 465g and a vertically movable member 465h. More specifically, the stepping motor 465a and the pulley 465b rotating synchronously with the stepping motor 465a are provided on the back surface of the frame 470 supporting the dispensing mechanism part 10. The pulley 465c is provided at a prescribed interval from the pulley 465b. The belt 465d is mounted between the pulleys 465b and 465c. The sliding screw 465f is coupled to a shaft portion of the pulley 465c through the torque limiter 465e idling when excess torque is applied. The vertically movable member 465h is vertically movably mounted on this sliding screw 465f. The vertically movable member 465h is further mounted on the frame 470 through the direct acting guide 465g to be vertically movable in the Z-axis direction. The vertically movable member 465h is vertically moved following rotation of the sliding screw 465f.

Operations of the gene amplifier/detector according to the second embodiment are described with reference to Figs. 21 to 48. The operations of the second embodiment other than the tip disposal bag set operation, the droplet removing operation and the lid closing operation are basically similar to those of the aforementioned first embodiment. According to the second embodiment, however, only one enzyme reagent container 436 can be set dissimilarly to the aforementioned first embodiment, and hence an operation of sucking an enzyme reagent from the enzyme reagent container 436 with the two syringe parts 12 of the dispensing mechanism part 10 must be changed to that similar to the operation of sucking the sample from the sample container 22 in the aforementioned first embodiment.

The operation of setting the tip disposal bag 452 on the bag set table 453 is described with reference to Figs. 34 to 40. The user performs this operation before the measuring part 401 starts a measuring operation. The user grips the handle 453c for drawing out the bag set table 453 from the storage part 451 and rotates the bag holding member 453b of the bag set table 453 from the state shown in Fig. 38 by about 90° along arrow B in Fig. 38, into a state shown in Fig. 39. The user fits the bottom of the tip disposal bag 452 into the fulcrum 453e of the bag set table 453 while opening the tip disposal bag 452 (see Fig. 40). Then, the user rotates the bag holding member 453b of the bag set table 453 by about 90° along arrow C in Fig. 39, thereby setting the tip disposal bag 452 on the bag set table 453 as shown in Fig. 35. After setting the tip disposal bag 452 on the bag set table 453, the user grasps the handle 453c shown in Fig. 35 for fitting the bag set table 453 in the storage part 451 along arrow D shown in Fig. 36. In this case, the overhangs 453h (see Fig. 35) of the bag set table 453 are in contact with the inner surface of the tip disposal bag 452, whereby the outer surface of the tip disposal bag 452 comes into contact with the pulleys 454a of the bag sensors 454 (see Figs. 36 and 37). Thus, the pulleys 454a receive force from the outer surface of the tip disposal bag 452 toward the bag sensors 454 (along arrow E in Figs. 36 and 37), thereby rotating the rotatable members 454b of the bag sensors 454 toward the bag sensors 454 as shown in Fig. 34. Thus, the bag sensors 454 are turned on, for determining that the tip disposal bag 452 is normally set.

If the user fits the bag set table 453 in the storage part 451 when the tip disposal bag 452 is not set or the overhangs 453h of the bag set table 453 are located outside the tip disposal bag 452, the pulleys 454a of the rotatable members 454b enter the notches 453i of the bag set table 453. In this case, the rotatable members 454b are not rotated toward the bag sensors 454 (along arrow E in Figs. 36 and 37). Thus, the bag sensors 454 are not turned on, for determining that the tip disposal bag 452 is not set on the bag set table 453.

After normally setting the tip disposal bag 452 as hereinabove described, the user sets the sample containers 22, the primer reagent containers 32a and the enzyme reagent container 436 similarly to the first embodiment, and starts the operation of the measuring part 401. Further, the user performs an operation of mounting the pipette tips 41, operations of sucking and discharging samples, primer reagents and an enzyme reagent, an operation of disposing the pipette tips 41 and the lid closing operation and amplification/detection after discharging the samples. In the tip disposal operation according to the second embodiment, the pipette tips 41 disposed into tip disposal holes 455a of the disposal hole forming part 455 are held inside the tip disposal bag 452 set on the bag set table 453 located under the disposal hold forming part 455. After an operation of detecting target genes (nucleic acid) from five reaction detection blocks 460a is terminated, the user takes out the bag set table 453 having the tip disposal bag 452 from the storage part 451. He/she upwardly rotates the bag holding member 453b from the state shown in Fig. 35, and closes the fastener 452a of the tip disposal bag 452. Then, the user disposes the tip disposal bag 452 into a prescribed disposal plant.

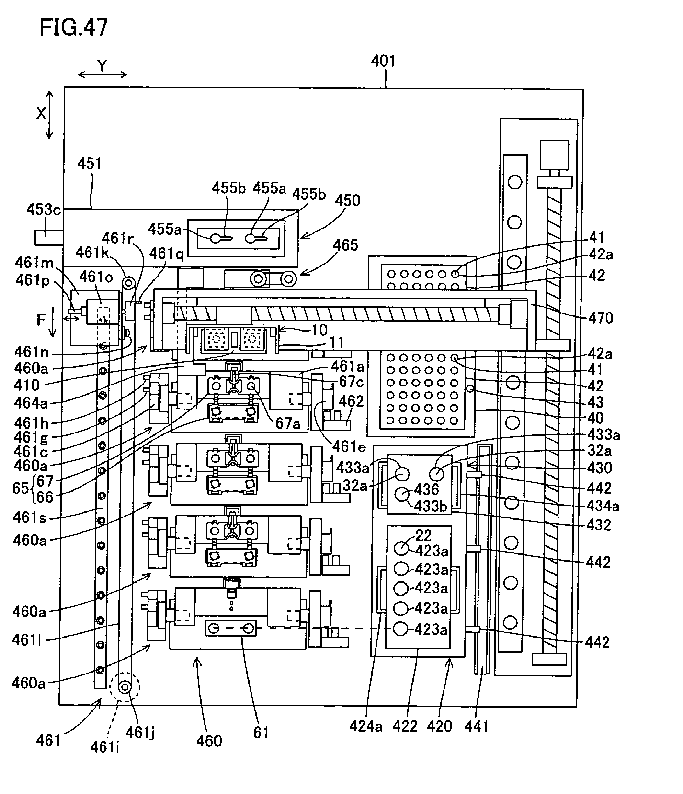

According to the second embodiment, the droplet removing operation is performed following a sample discharge operation, dissimilarly to the aforementioned first embodiment. More specifically, an electromagnetic valve (not shown) provided on the dispensing mechanism part 10 is driven immediately after the sample discharge operation so that the droplet removing member 410 projects toward the two pipette tips 41 along the X-axis direction (along arrow M in Fig. 41), as shown in Figs. 41 and 47. If residual liquids of samples drip from the forward ends of the two pipette tips 41, the two recess portions 412a of the drip pan member 42 engaged in the droplet removal member 410 receive the residual liquids before the same drip into the measuring part 401. Thus, the residual liquids of the samples are removed from the forward ends of the two pipette tips 41.

In the lid closing operation following the sample discharge operation according to the second embodiment, a lid pressing operation with respect to the lid support member 461a of the lid pressing member 464a is performed after rotation of the lid support member 461a with the electromagnetic valve mounting member 461m (see Figs. 42 to 44). The lid closing operation according to the second embodiment is now described in detail with reference to Figs. 22, 42 to 46 and 48.

In order to rotate the lid support member 461a through the electromagnetic valve mounting member 461m, the stepping motor 461i shown in Figs. 22, 42 and 44 is rotated/driven in a prescribed direction from the state with the open lie parts 67a after the primer reagents, the enzyme reagent and the samples are discharged into the cell parts 66a. Thus, the electromagnetic valve mounting member 461 is moved toward the front portion of the gene amplifier/detector (along arrow F in Fig. 42) through the pulleys 461j and 4611. At this time, the electromagnetic valve 461o is energized before the electromagnetic valve mounting member 461m moves to the position of the reaction detection block 460a to be lidded, for moving the pressing member 461r having the pressing part 461q mounted on the movable shaft 461p of the electromagnetic valve 461o along arrow G in Figs. 42 and 44. Thus, the pressing part 461q of the pressing member 461r comes into contact with the projection 461g, located on the upper position, of the rotatable member 461c for pressing the same along arrow H in Fig. 43. Thus, the rotatable member 461c is rotated along arrow H in Fig. 43 about the support shaft 461b against the urging force of the tension spring 461f. At this time, the lid support member 461a mounted on the rotatable member 461c through the support shaft 461b is also rotated along arrow H in Fig. 43, thereby rotating the lid parts 67a of the lid member 67 of the detection cell 65 placed on the lid support member 461a toward a cell member 66 of the detection cell 65. In this state, the lid pressing member 464a presses the lid support member 461a.

In order to press the lid support member 461a with the lid pressing member 464a, the frame 470 supporting the dispensing mechanism part 10 is moved in the X-axis direction while the dispensing mechanism part 10 is moved in the Y-axis direction with respect to the frame 470 from the home positions shown in Fig. 22. Thus, the lid pressing member 464a provided on the dispensing mechanism part 10 is moved to a position located above the rotated lid support member 461a and immediately under the vertically movable member 465h provided on the frame 470 as shown in Figs. 44 to 46 and 48. In this state, the stepping motor 465a shown in Fig. 45 is rotated/driven in a prescribed direction for rotating the pulley 465c through the pulley 465b and the belt 465d, thereby rotating the sliding screw 465f coupled to the pulley 465c. Thus, the vertically movable member 465h is downwardly moved (along arrow L in Figs. 45 and 46), thereby downwardly moving the lid pressing member 464a (along arrow K in Figs. 44 to 46) against the urging force of the tension spring 464c. Therefore, the lid pressing member 464a presses the lid support member 461a from above, thereby reliably closing the cell parts 66a of the detection cell 65 with the lid parts 67a. In this state, the sensing segments 461e mounted on the lid support member 461a through the support shafts 461d reach positions sensed by the sensors 462, thereby turning on the sensors 462. Thus, the sensors 462 determine that the lid closing operation is normally performed. The lid pressing operation on the lid support member 461a of the lid pressing member 464a is completed in the aforementioned manner. If at least constant force is applied when the vertically movable member 465h and the lid pressing member 464a press the lid support member 461a from above, the torque limiter 465e shown in Fig. 34 idles to prevent the lid parts 67a and the cell parts 66a from application of excess force.

Thereafter the stepping motor 465a is rotated/driven oppositely to the aforementioned prescribed direction for upwardly moving the vertically movable member 465h (oppositely to arrow L shown in Figs. 45 and 46), thereby upwardly moving the lid pressing member 464a (oppositely to arrow K in Figs. 44 to 46) due to the urging force of the tension spring 464c. Further, the stepping motor 461i shown in Figs. 22, 42 and 44 is rotated/driven oppositely to the prescribed direction, thereby moving the electromagnetic valve mounting member 461m toward the back face of the gene amplifier/detector (oppositely to arrow F in Fig. 42). If the electromagnetic valve 461o is energized at this time, the pressing part 461q of the pressing member 461r presses the projection 461h, located on the upper position, of the two projections 461g and 461h of the rotatable member 461c oppositely to arrow H in Fig. 43. Thus, the rotatable member 461c is rotated oppositely to arrow H in Fig. 43 about the support shaft 461b against the urging force of the tension spring 461f. At this time, the lid support member 461a is also rotated oppositely to arrow G in Fig. 42 through the support shaft 461b, to return to the initial position (state J in Fig. 43). The serial lid closing operation is performed in the aforementioned manner. The lid support member 461a is returned to the initial state (state J in Fig. 43) after termination of an operation for amplifying and detecting the samples similarly to the first embodiment.

According to the second embodiment, as hereinabove described, the condensed water discharge mechanism is so provided on the sample container set part 420 and the reagent container set part 430 that condensed water formed in the sample container set part 420 and the reagent container set part 430 can be inhibited from accumulating in the sample container set part 420 and the reagent container set part 430.

According to the second embodiment, as hereinabove described, the drain 441 of the condensed water discharge mechanism is so downwardly inclined toward the front face of the gene amplifier/detector that the condensed water can be efficiently drained.

According to the second embodiment, as hereinabove described, the tip disposal bag 462 can be so set on the tip disposal part 450 that the disposed pipette tips 41 are stored in the tip disposal bag 452, whereby the user can discharge the disposed pipette tips 41 from the analyzer with the tip disposal bag 452 without touching the pipette tips 41.

According to the second embodiment, as hereinabove described, the fulcrum 453e of the bag set table 453 is so provided with the two chamfers 453f that the tip disposal bag 452 set on the bag set table 453 can be inhibited from damage.

According to the second embodiment, as hereinabove described, the droplet removal member 410 is so provided on the dispensing mechanism part 10 that droplets dripping fro the pipette tips 41 discharging the samples into the cell parts 66a of the detection cell 65 can be received, whereby the residual liquids of the samples can be inhibited from adhering to the measuring part 401.

According to the second embodiment, as hereinabove described, the lid closing mechanism part 461 is constituted of the lid support members 461a rotating the lid parts 67a of each detection cell 65 to the lid closing position and the lid pressing member 464a downwardly pressing the lid support members 461a from above thereby applying downward pressing force to the lid parts 67a for completely closing the lid parts 67a, whereby the lid closing operation can be more reliably performed through the downward pressing force of the lid pressing member 464a as compared with the first embodiment performing the lid closing operation only through rotation.

The remaining effects of the second embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the sample analyzer (nucleic acid detector) according to the present invention is applied to a gene amplifier/detector amplifying a target gene by the LAMP in each of the aforementioned embodiments, the present invention is not restricted to this but may alternatively be applied to a gene amplifier/detector amplifying a target gene by polymerase chain reaction (PCR) or ligase chain reaction (LCR). Further, the sample analyzer (nucleic acid detector) according to the present invention may be applied to a sample analyzer other than the gene amplifier/detector.

While the sample containers 22 are arranged on the sample container set table 21 or 422 in a line along the X-axis direction in each of the aforementioned first and second embodiments, the present invention is not restricted to this but the sample containers 22 may alternatively be arranged on the sample container set table 21 or 422 in two lines along the X-axis direction. When each pair of sample containers 22 adjacent to each other along the Y-axis direction store the same sample, this sample can be simultaneously sucked with the two syringe parts 1, for performing prompter treatment.

While the two primer reagent containers 32a storing different primer reagents are arranged on the reagent container set table 31 or 432 at the prescribed interval in the Y-axis direction in each of the aforementioned first and second embodiments, the present invention is not restricted to this but at least three primer reagent containers 32a storing different primer reagents may alternatively be arranged on the reagent container set table 31 or 432 at prescribed intervals along the Y-axis direction. In this case, the reagent container set table 31 or 432 may be provided with at least three primer reagent container set holes 31a or 433a.

While the cell member 66 and the lid member 67 are integrally combined with each other to constitute each detection cell 65 integrally provided with a lid in each of the aforementioned embodiments, the present invention is not restricted to this but a detection cell integrally provided with a lid may be formed by a single member.

While the single dispensing mechanism part 10 dispenses both of reagents and samples in each of the aforementioned embodiments, the present invention is not restricted to this but different dispensing mechanism parts may be provided for dispensing reagents and samples respectively.

While the turbidity detection part 62 detecting turbidity of the liquid stored in each detection cell 65 is constituted of the LED light source part 62a and the photodiode part 62b in the aforementioned first embodiment, the present invention is not restricted to this but a turbidity detection part consisting of detection parts other than an LED light source part and a photodiode part may be employed. For example, the turbidity detection part may be constituted of a light source part formed by connecting an optical fiber member to a lamp light source and a photoreceptor (photodetector) capable of receiving light from the optical fiber member of the light source part.

While the turbidity detection part 62 detects whitening resulting from an amplification product (magnesium pyrophosphate) in each detection cell 65 thereby detecting the target gene in the aforementioned first embodiment, the present invention is not restricted to this but the target gene may alternatively be detected by detecting a reagent bonded to an amplification product of the target gene by prescribed detection means. In this case, ethidium bromide or TaqMan probe, for example, may be employed as the reagent.

While each detection cell 65 has the two cell parts 66a and the dispensing mechanism part 10 has the two syringe parts 12 in the aforementioned first embodiment, the detection cell 65 and the dispensing mechanism part 10 may alternatively have a single cell part and a single syringe part respectively.

While the condensed water discharge mechanism is provided under both of the sample container set table 422 and the reagent container set table 432 in the second embodiment, the present invention is not restricted to this but the condensed water discharge mechanism may alternatively be provided only under the sample container set table 422 or the reagent container set table 432.

While the pipette tips 41 disposed into the tip disposal part 50 or 450 are disposed as such in each of the aforementioned first and second embodiments, the pipette tips 41 may alternatively be cleaned and recycled.

While shafts in the X- and Y-axis directions supporting the arm part 11 are perpendicularly arranged in each of the aforementioned first and second embodiments, the present invention is not restricted to this but the two shafts supporting the arm part 11 may not necessarily be perpendicular to each other. Also when the two shafts supporting the arm part 11 are not perpendicular to each other, the arm part 11 can be moved in the X- and Y-axis directions by adjusting the rotational speeds of two motors rotating/driving the two shafts.

## Claims

1. A nucleic acid detection method comprising steps of:
automatically dispensing a reagent and a sample suspected to contain a target nucleic acid into a detection container (65) integrally provided with a lid (67), the detection container (65) comprising a first and second cell part (66a) and the lid (67) comprising a first and second lid part (67a);
closing said lid (67) of said detection container (65) after completely dispensing said reagent and said sample into said detection container (65);
amplifying said target nucleic acid by a reaction part (61) in said detection container (65) having closed said lid (67) and
detecting said target nucleic acid in said detection container (65) having said closed lid (67) wherein
detecting is performed by a detection part (62) having a light source part (62a) mounted on a substrate (64a) arranged on a first side surface of the reaction part (61) and a photodiode part (62b) or photoreceptor mounted on another substrate (64b) arranged on a second side surface of the reaction part (61),
closing said lid (67) of said detection container (65) is performed automatically , wherein the lid parts (67a) of the lid (67) placed on a lid closing arm (63a, 461a) are rotated toward the cell parts (66a) of the detection container (65) and the lid parts (67a) are closed with respect to the cell parts (66a),
carrying out said steps of dispensing said reagent and said sample, closing said lid (65), amplifying said target nucleic acid and detecting said target acid while arranging said detection container (65) on the same prescribed position of the reaction part (61).

2. The nucleic acid detection method according to claim 1, **characterized in that**
said step of dispensing said reagent and said sample includes a step of dispensing said reagent and said sample into said detection container (65) while opening said lid (67) of said detection container (65).

3. The nucleic acid detection method according to claim 1 or 2, further comprising
a step of discarding said detection container (65) having said closed lid (67) after carrying out said step of detecting the presence of said nucleic acid.

## Patentansprüche

1. Nukleinsäure-Erfassungsverfahren, die folgenden Schritte umfassend:
automatisches Abgeben eines Reagenz und einer Probe, die verdächtigt ist, eine Zielnukleinsäure zu enthalten, in einen Erfassungsbehälter (65), der integriert mit einem Deckel (67) versehen ist, wobei der Erfassungsbehälter (65) einen ersten und zweiten Zellenteil (66a) aufweist und der Deckel (67) einen ersten und zweiten Deckelteil (67a) aufweist;
Schließen des Deckels (67) des Erfassungsbehälters (65) nach einem vollständigen Abgeben des Reagenz und der Probe in den Erfassungsbehälter (65);
Verstärken der Zielnukleinsäure durch einen Reaktionsteil (61) in dem Erfassungsbehälter (65), der den Deckel (67) geschlossen hat, und
Erfassen der Zielnukleinsäure in dem Erfassungsbehälter (65), der den geschlossenen Deckel (67) aufweist, wobei
ein Erfassen durch einen Erfassungsteil (62) durchgeführt wird, der einen Lichtquellenteil (62a) an einem Substrat (64a) montiert aufweist, das an einer ersten Seitenoberfläche des Reaktionsteils (61) angeordnet ist, und einen Photodiodenteil (62b) oder Photorezeptor, der an einem anderen Substrat (64b) montiert ist, das an einer zweiten Seitenoberfläche des Reaktionsteils (61) angeordnet ist,
wobei ein Schließen des Deckels (67) des Erfassungsbehälters (65) automatisch durchgeführt wird, wobei die Deckelteile (67a) des Deckels (67), die an einem Deckelschließarm (63a, 461a) platziert sind, zu den Zellenteilen (66a) des Erfassungsbehälters (65) hin gedreht werden und die Deckelteile (67a) in Bezug auf die Zellenteile (66a) geschlossen werden,
Ausführen der Schritte des Abgebens des Reagenz und der Probe, Schließen des Deckels (65), Verstärken der Zielnukleinsäure und Erfassen der Zielsäure, während der Erfassungsbehälter (65) an der gleichen vorgeschriebenen Position des Reaktionsteils (61) angeordnet wird.

2. Nukleinsäure-Erfassungsverfahren nach Anspruch 1, **dadurch gekennzeichnet, dass** der Schritt des Abgebens des Reagenz und der Probe einen Schritt des Abgebens des Reagenz und der Probe in den Erfassungsbehälter (65), während der Deckel (67) des Erfassungsbehälters (65) geöffnet wird, umfasst.

3. Nukleinsäure-Erfassungsverfahren nach Anspruch 1 oder 2, ferner umfassend
einen Schritt des Wegwerfens des Erfassungsbehälters (65) mit dem geschlossenen Deckel (67), nach einem Ausführen des Schritts des Erfassens des Vorhandenseins der Nukleinsäure.

## Revendications

1. Procédé de détection d'un acide nucléique, comprenant les étapes suivantes :
l'introduction automatique d'un réactif et d'un échantillon suspecté de contenir un acide nucléique cible dans un récipient de détection (65) muni d'un couvercle (67) intégré, le récipient de détection (65) comprenant une première et une seconde partie de cellule (66a) et le couvercle (67) comprenant une première et une seconde partie de couvercle (67a) ;
la fermeture dudit couvercle (67) dudit récipient de détection (65) après la distribution complète dudit réactif et dudit échantillon dans ledit récipient de détection (65) ;
l'amplification dudit acide nucléique cible par une partie de réaction (61) dans ledit récipient de détection (65) ayant fermé ledit couvercle (67), et
la détection dudit acide nucléique cible dans ledit récipient de détection (65) ayant ledit couvercle (67) fermé, dans lequel :
la détection est réalisée par une partie de détection (62) ayant une partie de source de lumière (62a) montée sur un substrat (64a) agencé sur une première surface latérale de la partie de réaction (61) et une partie de photodiode (62b) ou un photorécepteur monté(e) sur un autre substrat (64b) agencé sur une seconde surface latérale de la partie de réaction (61),
la fermeture dudit couvercle (67) dudit récipient de détection (65) est réalisée automatiquement, dans laquelle les parties (67a) du couvercle (67) placées sur un bras de fermeture de couvercle (63a, 461a) pivotent vers les parties de cellule (66a) du récipient de détection (65) et les parties de couvercle (67a) sont fermées par rapport aux parties de cellule (66a), la mise en oeuvre desdites étapes de distribution dudit réactif et dudit échantillon, de fermeture dudit couvercle (65), d'amplification dudit acide nucléique cible et de détection dudit acide cible tout en disposant ledit récipient de détection (65) dans la même position prédéterminée de la partie de réaction (61).

2. Procédé de détection d'un acide nucléique selon la revendication 1, **caractérisé en ce que** :
ladite étape de distribution dudit réactif et dudit échantillon comprend une étape de distribution dudit réactif et dudit échantillon dans ledit récipient de détection (65) tout en ouvrant ledit couvercle (67) dudit récipient de détection (65).

3. Procédé de détection d'un acide nucléique selon la revendication 1 ou 2, comprenant en outre :
une étape de mise au rebut dudit récipient de détection (65) ayant ledit couvercle (67) fermé après la mise en oeuvre de ladite étape de détection de la présence dudit acide nucléique.
